(19) Europäisches Patentamt
European Patent Office
Office européen des brevets

(11) EP 4 187 996 B1

(12) **EUROPEAN PATENT SPECIFICATION**

(45) Date of publication and mention of the grant of the patent:
**06.05.2026 Bulletin 2026/19**

(21) Application number: **21857287.3**

(22) Date of filing: **04.06.2021**

(51) International Patent Classification (IPC):
***H04W 64/00*** *(2009.01)* ***H04B 7/0456*** *(2017.01)*
***H04B 17/17*** *(2015.01)* ***G01S 13/76*** *(2006.01)*
***H04B 1/10*** *(2006.01)* ***H04W 24/08*** *(2009.01)*

(52) Cooperative Patent Classification (CPC):
**H04B 7/0456; G01S 13/765; H04B 1/10; H04B 17/17;** G01S 7/0236; H04B 1/1027; H04B 17/318

(86) International application number:
**PCT/CN2021/098454**

(87) International publication number:
**WO 2022/037188 (24.02.2022 Gazette 2022/08)**

(54) **PASSIVE INTER-MODULATION SOURCE POSITIONING METHOD AND APPARATUS**

VERFAHREN UND VORRICHTUNG ZUR PASSIVEN POSITIONIERUNG EINER INTERMODULATIONSQUELLE

PROCÉDÉ ET APPAREIL DE POSITIONNEMENT DE SOURCE D'INTERMODULATION PASSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2020 CN 202010843094**

(43) Date of publication of application:
**31.05.2023 Bulletin 2023/22**

(73) Proprietor: **Huawei Technologies Co., Ltd.**
**Shenzhen, Guangdong 518129 (CN)**

(72) Inventors:
- **YANG, Zhi**
  **Shenzhen, Guangdong 518129 (CN)**
- **HUO, Qiang**
  **Shenzhen, Guangdong 518129 (CN)**
- **WANG, Jinglun**
  **Shenzhen, Guangdong 518129 (CN)**
- **CHEN, Xi**
  **Shenzhen, Guangdong 518129 (CN)**
- **ZOU, Zhiqiang**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**CN-A- 1 870 473** **CN-A- 111 521 897**
**US-A1- 2015 358 144** **US-A1- 2018 248 576**
**US-A1- 2018 332 487** **US-A1- 2018 359 048**

- **HUAWEI: "Consideration of the Radiation Performance of BS Systems", 3GPP TSG-RAN WG4 MEETING #59; R4-112765, vol. RAN WG4, no. Barcelona, Spain; 20110509, 16 May 2011 (2011-05-16), XP009534512**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### CROSS-REFERENCE TO RELATED APPLICATIONS

### TECHNICAL FIELD

This application relates to the field of wireless communications technologies, and in particular, to a passive inter-modulation source positioning method and an apparatus, a computer readable storage medium, a computer program product and a chip system.

### BACKGROUND

With the development of wireless communication systems, bandwidth and a quantity of antennas are increasing, and passive intermodulation (Passive InterModulation, PIM) interference becomes an important factor that limits a system capacity.

In a wireless communication system, passive inter-modulation refers to an inter-modulation effect caused by non-linearity of passive components, such as connectors, feeders, antennas, and filters, when the components work in a condition of high-power signals on a plurality of frequencies. When downlink transmit signals on two or more frequencies hit an inter-modulation source in an external environment, a PIM signal on a new frequency is generated and reflected back to a receive end of the system. If the frequency of the PIM signal falls within a receive frequency range of a receive antenna, the receive antenna receives the PIM signal. The PIM signal causes interference to an uplink received signal. Consequently, quality of the uplink received signal deteriorates, and a system capacity is reduced or an available frequency band range of the system is reduced.

Passive inter-modulation is a common phenomenon in communication systems. A level of inter-modulation is related to a manufacturing process, materials, a structure design, and an installation method of components, and is difficult to control. In addition, passive inter-modulation has time validity. To be specific, after a passive component (such as a duplexer or an antenna) is installed and used, an internal structure of the passive component changes due to factors such as thermal expansion and contraction, surface air oxidation, contamination, and looseness. Consequently, inter-modulation indicators gradually deteriorate. Therefore, it is difficult to ensure the solution of the problem of inter-modulation of passive components in an engineering manner with limited costs by improving the manufacturing process and standardizing the installation method.

Conventional PIM source positioning depends on an external device. However, due to a limitation of a working mechanism of the external device, an application scope is limited. For example, a solution of positioning a PIM source by using an external device in a near field scanning method is applicable only to a PIM source in an open structure, such as an antenna or a microstrip, and is not applicable to a PIM source in a closed structure, such as a cable or a cavity filter. For another example, a solution of positioning a PIM source by using a sound wave or ultrasonic wave scanning device in a vibration modulation method is applicable only to a mechanical PIM source (mechanical PIM source) such as a ferrite fragment or a metal fragment, and is not applicable to a non-mechanical PIM source such as a defective solder joint. For a specific PIM source, a sound wave frequency further needs to be tested, or a sound wave frequency needs to be traversed within a specific range. In addition, the external device may also become a new PIM source.

Because the problem of passive inter-modulation is inevitable in communication systems, how to accurately, quickly, and cost-effectively find a passive inter-modulation source without relying on an external device is an urgent problem to be resolved.

US 2018/359048 A1 discloses a method for link adaptation that accounts for passive intermodulation, PIM, at a network node of a wireless communication system, where the network node has a first transmitter configured to generate first transmissions at a set of transmission frequencies at at least one antenna and has a receiver configured to receive signals at a set of receive frequencies. The method includes: determining, based on at least one transmission frequency of the set of transmission frequencies at at least one antenna, a PIM power spectral density (PSD) versus the set of receive frequencies; and performing link adaptation based on the PIM PSD versus the set of receive frequencies. Performing the link adaptation includes choosing at least one transmission parameter of a second transmitter scheduled to transmit on a frequency among the set of receive frequencies.

US2015/358144 A1 discloses a method for detecting intermodulation in broadband communication affecting receiver sensitivity. The method includes: transmitting, at a base station, a first signal at a first centre frequency and a second signal at a second centre frequency with a predetermined transmit power; capturing, at the base station, received signal at a reception frequency; obtaining, at the base station, a delay between the transmitted signal and a passive intermodulation caused received signal.

## SUMMARY

The invention is set out in the appended set of claims. Embodiments of this application provide a passive inter-modulation source positioning method and an apparatus, to help accurately, quickly, and cost-effectively find a PIM source without relying on an external device.

According to a first aspect, an embodiment of this application provides a passive inter-modulation source method, as defined by claim 1. positioning

According to a second aspect, an embodiment of this application provides an apparatus, as defined by claim 9.

According to a third aspect, an embodiment of this application provides a chip system including a processor. The processor is coupled to a memory. The memory is configured to store a program or instructions. When the program or the instructions are executed by the processor, the chip system is enabled to implement the method in the first aspect or any possible design of the first aspect.

According to a fourth aspect, an embodiment of this application provides a computer-readable storage medium, storing a computer program or instructions. When the computer program or the instructions are executed, a computer is enabled to perform the method in the first aspect or any possible design of the first aspect.

According to a fifth aspect, an embodiment of this application provides a computer program product. When a computer reads and executes the computer program product, the computer is enabled to perform the method in the first aspect or any possible design of the first aspect.

## BRIEF DESCRIPTION OF DRAWINGS

FIG. 1 is a schematic diagram of a network architecture of a communication system to which an embodiment of this application is applicable;

FIG. 2A and FIG. 2B are schematic diagrams of network devices to which an embodiment of this application is applicable;

FIG. 3 is a schematic flowchart of a PIM source positioning method according to an embodiment of this application;

FIG. 4 is a schematic flowchart of a PIM source positioning method according to an embodiment of this application;

FIG. 5 is a schematic flowchart of a PIM source positioning method according to an embodiment of this application;

FIG. 6 is a schematic flowchart of a PIM source positioning method according to an embodiment of this application;

FIG. 7 is a schematic flowchart of a PIM source positioning method according to an embodiment of this application;

FIG. 8 is a schematic flowchart of a PIM source positioning method according to an embodiment of this application;

FIG. 9 is a schematic diagram of a structure of a PIM source positioning apparatus according to an embodiment of this application, and

FIG. 10 is a schematic diagram of another structure of a PIM source positioning apparatus according to an embodiment of this application.

## DESCRIPTION OF EMBODIMENTS

To resolve the problem mentioned in the background, this application provides a solution. This solution does not need to depend on an external device. For each of a plurality of scanning spots, a network device sequentially sends a plurality of downlink signals with different frequencies and receives uplink PIM signals generated by excitation by the plurality of downlink signals, and then performs analysis based on the uplink PIM signals respectively corresponding to the plurality of scanning spots, to determine a PIM source from the plurality of scanning spots. This solution can be used to repair the network device before the network device is delivered, to effectively suppress (or eliminate) passive inter-modulation signals that may be generated by the plurality of downlink signals with different frequencies sent by the network device. Alternatively, this solution can also be used to effectively suppress, periodically or in a specific period during usage of the network device, passive inter-modulation signals that may be generated by the plurality of downlink signals with different frequencies sent by the network device. Therefore, by positioning and suppressing the PIM source, generation of the passive inter-modulation interference signal is avoided, performance of a communication system is effectively improved, and radio resource utilization is improved.

To make objectives, technical solutions and advantages of embodiments of this application clearer, the following further describes embodiments of this application in detail with reference to the accompanying drawings.

The technical solutions in embodiments of this application may be used in various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a global system for mobile communications (global system for mobile communications, GSM), a 5th generation (5th generation, 5G) mobile communication system, and a new radio (new radio, NR) system, or may be used in a future communication system.

FIG. 1 is a schematic diagram of a structure of a communication system according to an embodiment of this application. The communication system includes a network device and at least one terminal device (for example, terminals 1 to 6 shown in FIG. 1). The network device may communicate with at least one terminal device (for example, the terminal 1) through an uplink (uplink, UL) and a downlink (downlink, DL). The uplink is a physical layer communication link from the terminal device to the network device, and the downlink is a physical layer communication link from the network device to the terminal device.

Optionally, the network device has a plurality of transmit antennas and a plurality of receive antennas, and may communicate with the at least one terminal device by using a MIMO technology.

In this embodiment of this application, a non-ideal factor used to generate a passive inter-modulation signal is referred to as a PIM source. Because the passive inter-modulation interference is usually caused by nonlinear characteristics of various passive components (such as a duplexer, an antenna, a feeder, and a radio frequency cable connector) in a transmit channel, the PIM source may also be referred to as a nonlinear source.

It should be understood that there may be a plurality of network devices in the communication system, and one network device may provide services for a plurality of terminal devices. A quantity of network devices and a quantity of terminal devices included in the communication system are not limited in this embodiment of this application. The network device and each of some or all of the at least one terminal device in FIG. 1 may implement the technical solution provided in this embodiment of this application. In addition, various terminal devices shown in FIG. 1 are merely some examples of the terminal device. It should be understood that the terminal device in this embodiment of this application is not limited thereto.

The solution provided in this application is usually used in a network device in a wireless communication system.

The network device mentioned in this embodiment of this application is also referred to as an access network device, and is a device that is in a network and that is configured to connect a terminal device to a wireless network. The network device may be a node in a radio access network, and may also be referred to as a base station, or may be referred to as a RAN node (or device). The network device may be an evolved NodeB (evolved NodeB, eNodeB) in an LTE system or an LTE-advanced system (LTE-Advanced, LTE-A), may be a next generation base station (next generation NodeB, gNodeB) in a 5G NR system, or may be a NodeB (NodeB, NB), a base station controller (base station controller, BSC), a base transceiver station (base transceiver station, BTS), a transmission reception point (transmission reception point, TRP), a home base station (for example, a home evolved NodeB or home NodeB, HNB), a baseband unit (baseband unit, BBU), a Wi-Fi access point (access point, AP), a relay node, an integrated access and backhaul (integrated access and backhaul, IAB) node, a base station in a future mobile communication system, or the like, or may be a central unit (central unit, CU) and a distributed unit (distributed unit, DU). This is not limited in this embodiment of this application. In a scenario in which an access network device includes a CU and a DU in separate deployment, the CU supports protocols such as a radio resource control (radio resource control, RRC), a packet data convergence protocol (packet data convergence protocol, PDCP), and a service data adaptation protocol (service data adaptation protocol, SDAP); and the DU mainly supports a radio link control (radio link control, RLC) layer protocol, a media access control (medium access control, MAC) layer protocol, and a physical layer protocol.

For example, as shown in FIG. 2A, the network device may include a BBU, and a remote radio unit (remote radio unit, RRU) and an antenna (antenna) that are connected to the BBU. The BBU is mainly responsible for baseband algorithm related calculation. The BBU interacts with the RRU through a common public radio interface (common public radio interface, CPRI), and the RRU is connected to the antenna through a feeder. It should be understood that FIG. 2A is described by using an example in which one BBU is connected to one RRU. It should be understood that in actual application, one BBU may be connected to one or more RRUs, and a network device may include more BBUs and RRUs connected to the BBUs. This is not limited in this application.

For example, as shown in FIG. 2B, the network device may include a BBU and an active antenna processing unit (active antenna processing unit, AAU) connected to the BBU. The BBU is mainly responsible for baseband algorithm related calculation. The BBU interacts with the AAU through a common public radio interface (common public radio interface, CPRI). It should be understood that FIG. 2B is described by using an example in which one BBU is connected to one AAU. It should be understood that in actual application, one BBU may be connected to one or more AAUs, and a network device may include more BBUs and AAUs connected to the BBUs. This is not limited in this application.

The terminal device in this embodiment of this application is a device having a wireless transceiver function, and may be deployed on land, including an indoor device or an outdoor device, a handheld device, a wearable device, or a vehicle-mounted device, may be deployed on water (for example, on a ship), or may be deployed in the air (for example, on an airplane, a balloon, or a satellite). The terminal device may communicate with a core network through a radio access network (radio access network, RAN), and exchange a voice and/or data with the RAN. The terminal device may be a mobile phone, a tablet computer, a computer having a wireless transceiver function, a mobile Internet device, a wearable device, a virtual reality terminal device, an augmented reality terminal device, a wireless terminal in industrial control, a wireless terminal in unmanned driving, a wireless terminal in telemedicine, a wireless terminal in a smart grid, a wireless terminal in transportation security, a wireless terminal in a smart city, a wireless terminal in a smart home, or the like. Application scenarios are not limited in this embodiment of this application. The terminal device may also be sometimes referred to as user equipment (user equipment, UE), a mobile station, a remote station, or the like. A specific technology, a device form, and a name that are used by the terminal device are not limited in this embodiment of this application.

A carrier (which may also be referred to as a carrier frequency) in this embodiment of this application is a radio wave having a specific frequency and a specific bandwidth (for example, 10 M), and is used to carry a to-be-transmitted radio signal. A frequency band refers to some spectrum resources used in wireless communication. For example, an 1800 M frequency band is used in an LTE system. Usually, one frequency band includes a plurality of carriers. For example, if a bandwidth of the 1800 M frequency band is 75 M, the frequency band may include m ($m \geq 1$) carriers with a bandwidth of 20 M and n ($n \geq 1$) carriers with a bandwidth of 10 M. It is clear that there is another possible carrier division manner. This is not limited in this application. In this application, one receive channel or transmit channel may process a signal that includes at least one carrier.

It should be noted that, in the following descriptions of this embodiment of this application, a matrix is represented by using an uppercase bold letter, a vector is represented by using a lowercase bold letter, and performing conjugate transposition, transposition, and complex conjugate transformation on a matrix/vector is represented by using $(\cdot)^H$, $(\cdot)^T$, and $(\cdot)^*$.

It should be noted that, terms "system" and "network" may be used interchangeably in this embodiment of this application. "A plurality of" means two or more than two. In view of this, "a plurality of" may also be understood as "at least two" in this embodiment of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" describes an association relationship for describing associated objects and represents that three relationships may exist. For example, A and/or B may represent the following three cases: Only A exists, both A and B exist, and only B exists. In addition, unless otherwise specified, the character "/" usually indicates an "or" relationship between the associated objects.

Unless otherwise stated, ordinal numbers such as "first" and "second" in this embodiment of this application are used to distinguish between a plurality of objects, and are not used to limit an order, a time sequence, priorities, or importance of the plurality of objects. In addition, descriptions of "first" and "second" do not limit that the objects are definitely different.

To avoid a problem that an application scope is limited and a PIM source is potentially to be added because an external device is used in a conventional PIM source positioning solution, an embodiment of this application provides a PIM source positioning method. The method may be applied to a network device in the communication system shown in FIG. 1, for example, a network device shown in FIG. 2A or FIG. 2B, and may implement positioning of a PIM source in an external environment. The following describes specific steps of the method in detail with reference to a flowchart of a PIM source positioning method shown in FIG. 3.

S310: The network device sequentially performs a scanning process on each of a plurality of scanning spots by using the following steps: sending a plurality of downlink signals with different frequencies for a first scanning spot by using a transmit antenna, and receiving an uplink PIM signal for the first scanning spot by using a receive antenna. The first scanning spot is any one of the plurality of scanning spots, frequencies of carriers on which any two of the plurality of downlink signals are carried are different, and the uplink PIM signal is generated by excitation by any at least two of the plurality of downlink signals.

S320: The network device determines a PIM source from the plurality of scanning spots based on uplink PIM signals respectively corresponding to the plurality of scanning spots.

The network device divides a spatial area in which scanning is to be performed to detect a PIM source (a scanned area for short) into I grids, where each grid is represented by one scanning spot (g_x,g_y,g_z), and I is a positive integer, indicating a quantity of scanning spots.

The network device may perform the scanning process in S310 on any one of the plurality of scanning spots, to implement one scanning on the scanning spot. It should be understood that, in S310, only a first scanning spot is used to represent any scanning spot on which the network device currently performs the scanning process. This is merely for ease of differentiation, but is not intended to limit a function, a sequence, or the like of the scanning spot. It should be noted that in this embodiment of this application, one scanning process performed by the network device on each scanning spot is a process of sending a plurality of downlink signals with different frequencies at one time, receiving a corresponding uplink PIM signal, and/or obtaining a first signal for analysis for the scanning spot. During specific implementation, the scanning process may be implemented as one time of signal receiving and sending for a single scanning spot, or may be implemented as one time of signal scanning on a plurality of scanning spots in one time of signal receiving and sending. This is not limited in this application. The following provides detailed descriptions with reference to embodiments.

In a possible design, in each scanning process on the first scanning spot, the plurality of downlink signals that are sent by the network device for the first scanning spot by using the transmit antenna in S310 may be downlink baseband signals with different frequencies that are sent by the network device by using the transmit antenna when the network device works normally. When the plurality of downlink signals with different frequencies arrive at a PIM source through a downlink channel, an uplink PIM signal is generated by excitation, and the uplink PIM signal arrives at a receive antenna through an uplink channel. If a frequency of the uplink PIM signal falls within a receive frequency range of the receive antenna, the receive antenna receives the uplink PIM signal. After traversing the plurality of scanning spots, the network device may perform analysis and determining based on an uplink PIM signal corresponding to each of the plurality of scanning spots in S320, and determine the PIM source in the plurality of scanning spots. It should be noted that, in this embodiment, traversing means that the network device completes at least one scanning process in S310 on each of the plurality of scanning spots. In some embodiments, if the uplink PIM signal corresponding to each scanning spot further needs to be processed, the scanning process in S310 may further include a process of processing the uplink PIM signal corresponding to the scanning spot. The following provides detailed descriptions with reference to the embodiments, and details are not described herein again. In addition, that the network device performs analysis and determining based on the uplink PIM signal corresponding to each of the plurality of scanning spots may include but is not limited to analyzing powers, phases, or other related information of the uplink PIM signals (or signals obtained through processing) of the plurality of scanning spots. This is not limited in this application.

The network device further obtains a precoding set based on the plurality of scanning spots. The precoding set includes a plurality of precoding matrices that are of the plurality of scanning spots and that respectively correspond to different downlink carrier frequencies. A precoding matrix that is of each scanning spot and that corresponds to a different downlink carrier frequency is used in precoding processing on at least one downlink signal in the plurality of downlink signals in one scanning process on the scanning spot. If the scanning spot is a PIM source, or there is a PIM source near the scanning spot, after precoding processing is performed on the downlink signal based on a precoding matrix of the scanning spot, a power of a PIM signal can be increased, where the PIM signal is generated by excitation by the downlink signal at the scanning spot or at the PIM source near the scanning spot. Because a power of an uplink PIM signal that corresponds to the scanning spot or a PIM source near the scanning spot and that is received by the receive antenna is increased, when the network device performs analysis and determining based on the uplink PIM signal corresponding to each of the plurality of scanning spots in S320, accuracy of positioning the PIM source is higher. It should be noted that, in this embodiment of this application, the precoding matrix is any precoding matrix in at least one precoding matrix of each scanning spot, and "first" is merely used for ease of distinguishing, but is not any limitation on the precoding matrix.

In another possible design, the network device may further obtain a weight set based on the plurality of scanning spots. The weight set may include a weight matrix of a plurality of scanning spots, and the weight matrix may be used in weighted summation processing on uplink PIM signals received by a plurality of receive antennas in each time of scanning of the first scanning spot, to obtain a first signal and determine a power of the first signal. If a scanning spot is the PIM source, or there is a PIM source near the scanning spot, a power of a first signal obtained by performing weighted summation processing on an uplink PIM signal based on a weight matrix of the scanning spot is higher than a power of a first signal corresponding to a scanning spot near a non-PIM source. Therefore, when the network device performs analysis and determining based on a first signal corresponding to each of the plurality of scanning spots to determine the PIM source in the plurality of scanning spots in S320, accuracy of positioning the PIM source is higher. It should be noted that, in this embodiment of this application, the weight matrix is any weight matrix in at least one weight matrix of each scanning spot, and "first" is merely used for ease of distinguishing, but is not any limitation on the weight matrix.

Based on the precoding set and/or the weight set, the PIM source positioning method in this embodiment of this application may be implemented in a plurality of manners. Examples are as follows.

Example 1: Downlink positioning method

In each scanning process on the first scanning spot, in S310, the network device may perform precoding processing on at least one downlink signal in a plurality of downlink signals based on at least one precoding matrix of the first scanning spot, send a plurality of downlink signals for the first scanning spot by using the transmit antenna, and receive an uplink PIM signal for the first scanning spot by using the receive antenna. After traversing the plurality of scanning spots, the network device may perform analysis and determining based on an uplink PIM signal corresponding to each of the plurality of scanning spots in S320, and determine the PIM source in the plurality of scanning spots. It should be noted herein that, in this embodiment of this application, a precoding matrix of each scanning spot corresponds to a downlink carrier frequency. In a scanning process on the first scanning spot, a type of precoding processing performed on a plurality of downlink signals may be preconfigured. In addition, when precoding processing is performed in a scanning process on the first scanning spot, precoding processing is performed on a downlink signal of a corresponding downlink carrier frequency respectively based on a preconfigured precoding processing type and based on precoding matrices corresponding to different downlink carrier frequencies of the scanning spot. Therefore, a quantity of scanning processes on each scanning spot may be equal to a quantity of precoding matrices corresponding to at least one downlink carrier frequency. Traversing the plurality of scanning spots means that the network device completes at least one scanning process in S310 on each precoding matrix that is of each of the plurality of scanning spots and that corresponds to the at least one downlink carrier frequency.

Example 2: Uplink positioning method

In S310, the network device sends, by using a transmit antenna, a plurality of downlink signals (which may be a plurality of downlink baseband signals with different frequencies that are sent by the network device by using the transmit antenna when the network device works normally), and receives, by using a receive antenna, an uplink PIM signal generated by excitation by the plurality of downlink signals. The network device performs, in each scanning process on the first scanning spot based on a weight matrix of the first scanning spot, weighted summation processing on uplink PIM signals received by the plurality of receive antennas, to obtain a first signal, and determines a power of the first signal. After traversing the plurality of scanning spots, the network device may perform analysis and determining based on a power of a first signal corresponding to each of the plurality of scanning spots in S320, and determine the PIM source in the plurality of scanning spots. Herein, traversing means that the network device completes at least one process of weighted summation processing on each weight matrix of each first scanning spot in the plurality of scanning spots to obtain the first signal and determining the power of the first signal.

Example 3: Downlink + uplink positioning method

In each scanning process on the first scanning spot, in S310, the network device may perform precoding processing on at least one downlink signal in a plurality of downlink signals based on at least one precoding matrix of the first scanning spot, send a plurality of downlink signals for the first scanning spot by using the transmit antenna, and receive an uplink PIM signal for the first scanning spot by using the receive antenna. The network device performs, based on a weight matrix of the first scanning spot, weighted summation processing on uplink PIM signals received by the plurality of receive antennas, to obtain a first signal, and determines a power of the first signal. After traversing the plurality of scanning spots, the network device may perform analysis and determining based on a power of a first signal corresponding to each of the plurality of scanning spots in S320, and determine the PIM source in the plurality of scanning spots. Herein, traversing means that the network device completes, for each precoding matrix and each weight matrix that are of each first scanning spot in the plurality of scanning spots and that correspond to the at least one downlink carrier frequency, at least one process of sending a plurality of downlink signals with different frequencies to obtain a first signal, and determining a power of the first signal. For details, refer to related descriptions in Example 1 and Example 2. In addition, each precoding matrix and each weight matrix that are of each first scanning spot and that correspond to the at least one downlink carrier frequency may be randomly combined, to implement one scanning process on the first scanning spot. This is not limited in this application.

For ease of understanding, the following first describes a manner of obtaining a precoding set and/or a weight set by using an example, and then describes in detail the method steps in the foregoing Example 1 to Example 3 with reference to the method flowcharts in FIG. 4 to FIG. 6.

1. Obtaining a precoding set and/or a weight set

The network device may obtain the precoding set and/or the weight set based on a preset model and a preset parameter.

The preset model may be an antenna electromagnetic field model or another model, may be a simulation model, or may be an approximate model. This is not limited in this application.

For example, the preset model may be a pre-obtained antenna electromagnetic field model or an electromagnetic field model equation F( ). The network device may obtain precoding matrices of a plurality of scanning spots based on the antenna electromagnetic field model and a downlink configuration parameter. The precoding matrices of all scanning spots constitute the precoding set. The downlink configuration parameter may include, for example, a transmit antenna parameter and a PIM parameter. The transmit antenna parameter may include, for example, frequencies (or referred to as center frequencies) of at least two downlink carriers, a frequency of a subcarrier, a quantity of transmit antennas, and a position, a form, and a polarization direction of a transmit antenna. The PIM parameter may include inter-modulation parameters of PIM signals corresponding to a plurality of downlink signals, for example, a PIM order and a PIM frequency. The network device may obtain weight matrices of a plurality of scanning spots based on the antenna electromagnetic field model and an uplink configuration parameter. The weight matrices of all scanning spots constitute the weight set. The uplink configuration parameter may include, for example, a receive antenna parameter and a PIM parameter. The receive antenna parameter may include, for example, a frequency (or referred to as a center frequency) of an uplink carrier, a frequency of an uplink subcarrier, a quantity of receive antennas, and a position, a form, and a polarization direction of a receive antenna. The PIM parameter may include inter-modulation parameters of PIM signals corresponding to a plurality of downlink signals, for example, a PIM order and a PIM frequency. It should be understood that, in this embodiment of this application, the antenna electromagnetic field model may be obtained based on an actual application scenario or an application requirement, and the downlink configuration parameter and/or the uplink configuration parameter may also be obtained based on an actual scenario. This is not limited in this application.

This embodiment of this application may be applied to a two carrier scenario (where downlink signals are sent by using two downlink carriers with different frequencies), or may be applied to a multi-carrier scenario (where downlink signals are sent by using three or more downlink carriers with different frequencies), and may be applied to third-order inter-modulation, or may be applied to a case of another order (for example, fifth-order inter-modulation or seventh-order inter-modulation). This is not limited in this application. For ease of understanding, the following uses a two-carrier scenario and third-order inter-modulation PIM 3 as an example to describe a manner of obtaining a precoding set and/or a weight set.

1. Precoding set

A downlink configuration parameter is obtained. For example, two downlink carriers with different frequencies are respectively denoted as $DL_0$ and $DL_1$. A frequency of $DL_0$ is denoted as $f_0$, and a frequency of $DL_1$ is denoted as $f_1$. A frequency of a third-order inter-modulation signal PIM 3 generated by excitation by a downlink signal carried on $DL_0$ and a downlink signal carried on $DL_1$ is denoted as $f_p = 2f_0 - f_1$. A quantity of transmit antennas of the network device is denoted as $N_{Tx}$. Another downlink configuration parameter may be further obtained, and details are not described herein again.

A position of each scanning spot is denoted as $(g_x, g_y, g_z)$, where $g_x$, $g_y$, and $g_z$ respectively represent coordinate values of the scanning spot in an x direction, a y direction, and a z direction in space. For each scanning spot $(g_x, g_y, g_z)$ and each downlink carrier frequency $f_i$, the network device obtains, based on a downlink configuration parameter and a preset antenna electromagnetic field model, a first electric field matrix $E1(f_i, g_x, g_y, g_z)$ that is of the scanning spot and that corresponds to the downlink carrier frequency $f_i$. $E1(f_j, g_x, g_y, g_z)$ is a matrix of $N_{Tx} \times 3$, and 3 represents three components of $E1(f_i, g_x, g_y, g_z)$ in the electric field space, which are respectively $E1_x(f_i, g_x, g_y, g_z)$, $E1_y(f_i, g_x, g_y, g_z)$, and $E1_z(f_i, g_x, g_y, g_z)$. The network device obtains, based on the first electric field matrix $E1(f_i, g_x, g_y, g_z)$ of each scanning spot, at least one precoding matrix that is of the scanning spot and that corresponds to each downlink carrier frequency $f_i$. Precoding matrices of all scanning spots constitute a precoding set.

The following describes a manner of obtaining a precoding matrix of a scanning spot by using an example in which the first scanning spot is any scanning spot in a plurality of scanning spots.

Example A1: Obtaining a precoding matrix based on an electric field matrix of a scanning spot

A precoding matrix of a first scanning spot may be a complex conjugate matrix of a first electric field matrix of the first scanning spot, and/or a normalized matrix of the complex conjugate matrix of the first electric field matrix of the first scanning spot. The precoding matrix is represented in a form shown in Table 1:

**Table 1**

| | $w(f_i, g_x, g_y, g_z)$ |
|---|---|
| Example A1-1 | $E1^*(f_i, g_x, g_y, g_z)$ |
| Example A1-2 | $\frac{E1^*(f_i, g_x, g_y, g_z)}{\lvert E1(f_i, g_x, g_y, g_z)\rvert}$ |

$w(f_i, g_x, g_y, g_z)$ represents an obtained precoding matrix that is of the first scanning spot and that corresponds to a downlink carrier $DL_i$ with a frequency of $f_i$. * represents complex conjugation, and || represents a modulus of a matrix/vector. A precoding matrix in Example A1-2 is a result obtained by performing normalization on a precoding matrix in Example A1-1.

Example B1: Obtaining a precoding matrix based on an electric field spatial component

A precoding matrix of a first scanning spot may be a complex conjugate matrix of at least one spatial component of the first electric field matrix of the first scanning spot, and/or a normalized matrix of the complex conjugate matrix of the at least one spatial component of the first electric field matrix of the first scanning spot. The precoding matrix is represented in a form shown in Table 2:

**Table 2**

| | $w_x(f_i, g_x, g_y, g_z)$ | $w_y(f_i, g_x, g_y, g_z)$ | $w_z(f_i, g_x, g_y, g_z)$ |
|---|---|---|---|
| Example B1-1 | $E1_x^*(f_i, g_x, g_y, g_z)$ | $E1_y^*(f_i, g_x, g_y, g_z)$ | $E1_z^*(f_i, g_x, g_y, g_z)$ |
| Example B1-2 | $\frac{E1_x^*(f_i, g_x, g_y, g_z)}{\lvert E1_x(f_i, g_x, g_y, g_z)\rvert}$ | $\frac{E1_y^*(f_i, g_x, g_y, g_z)}{\lvert E1_y(f_i, g_x, g_y, g_z)\rvert}$ | $\frac{E1_z^*(f_i, g_x, g_y, g_z)}{\lvert E1_z(f_i, g_x, g_y, g_z)\rvert}$ |

$w_x(f_i, g_x, g_y, g_z)$, $w_y(f_i, g_x, g_y, g_z)$, and $w_z(f_i, g_x, g_y, g_z)$ respectively represent precoding matrices that are obtained in directions x, y, and z, that are of the first scanning spot, and that correspond to a downlink carrier $DL_i$ with a frequency of $f_i$. * represents complex conjugation, and || represents a modulus of a matrix/vector. Precoding matrices in Example B1-2 are results obtained by performing normalization on precoding matrices in Example B1-1.

It should be understood that, Example B1-1 and Example B1-2 in Table 2 are merely examples of obtaining a precoding matrix based on an electric field spatial component, but are not any limitation. In actual application, for example, an electric field component in one or more of the directions x, y, and z may be selected to obtain precoding matrices that are of the first scanning spot and that correspond to different downlink carrier frequencies, or an electric field component in another direction may be selected to obtain a precoding matrix of the first scanning spot. This is not limited in this application. In addition, to further improve positioning accuracy of the PIM source, for each first scanning spot, more precoding matrices may be selected, and may include but are not limited to the components in the three directions. This is not limited in this application.

Example C1: Obtaining a precoding matrix based on electric field singular value decomposition (singular value decomposition, SVD)

A precoding matrix of a first scanning spot may be a complex conjugate matrix of at least one eigenvector obtained through singular value decomposition SVD by the first electric field matrix of the first scanning spot.

For example, for each scanning spot $(g_x, g_y, g_z)$, for a downlink carrier with a frequency of $f_i$, $C(f_i, g_x, g_y, g_z) = E1(f_i, g_x, g_y, g_z)E1^H(f_i, g_x, g_y, g_z)$ is defined, where H represents a conjugate transposition of a matrix. SVD decomposition of $C(f_i, g_x, g_y, g_z)$ is represented as follows:

$$C = U\Lambda V^H$$

A diagonal of Λ includes three non-zero eigenvalues, which are respectively denoted as $\lambda_1(f_i, g_x, g_y, g_z)$, $\lambda_2(f_i, g_x, g_y, g_z)$, and $\lambda_3(f_i, g_x, g_y, g_z)$ in descending order. Through SVD decomposition, eigenvectors corresponding to $\lambda_1$, $\lambda_2$, and $\lambda_3$ are respectively $v_1(f_i, g_x, g_y, g_z)$, $v_2(f_i, g_x, g_y, g_z)$, and $v_3(f_i, g_x, g_y, g_z)$. The precoding matrix is represented in a form shown in Table 3:

**Table 3**

| | $w_1(f_i, g_x, g_y, g_z)$ | $w_2(f_i, g_x, g_y, g_z)$ | $w_3(f_i, g_x, g_y, g_z)$ |
|---|---|---|---|
| Example C1-1 | $v_1^*(f_i, g_x, g_y, g_z)$ | $v_2^*(f_i, g_x, g_y, g_z)$ | $v_3^*(f_i, g_x, g_y, g_z)$ |
| * represents a complex conjugation. | | | |

Similar to Example B1, when the precoding matrix is obtained based on the manner in Example C1, for each first scanning spot, $w_1$, $w_2$, and $w_3$ may be selected, or one or two of $w_1$, $w_2$, and $w_3$ may be selected. This is not limited in this application.

2. Weight set

A weight matrix and a precoding matrix may be obtained based on a same antenna electromagnetic field model. In different cases, only a related parameter needs to be replaced. For example, in the following embodiment, a transmit antenna parameter is replaced with a receive antenna parameter, and a second electric field matrix and a weight matrix of each first scanning spot in a plurality of scanning spots are obtained. It should be noted that, herein, only based on a same frequency, a process from a PIM source to an antenna is replaced with a process from an antenna to a PIM source. It is assumed that a receive antenna transmits an electromagnetic wave at a frequency of $f_{UL}$, and a weight matrix is obtained based on a second electric field matrix radiated to a scanning spot.

An uplink configuration parameter is obtained. For example, an uplink carrier is denoted as UL, a frequency of the uplink carrier is denoted as $f_{UL}$, and a quantity of receive antennas of the network device is denoted as $N_{Rx}$. Another uplink configuration parameter may be further obtained, and details are not described herein again.

A position of each scanning spot is denoted as ($g_x$, $g_y$, $g_z$), where $g_x$, $g_y$, and $g_z$ respectively represent coordinate values of the scanning spot in an x direction, a y direction, and a z direction in space. For each scanning spot ($g_x$, $g_y$, $g_z$), the network device obtains a second electric field matrix E2($f_{UL}$, $g_x$, $g_y$, $g_z$) of the scanning spot based on an uplink configuration parameter and a preset antenna electromagnetic field model. E2($f_{UL}$, $g_x$, $g_y$, $g_z$) is a matrix of $N_{Rx} \times 3$, and 3 represents three components of E2($f_{UL}$, $g_x$, $g_y$, $g_z$) in the electric field space, which are respectively $E2_x$($f_{UL}$, $g_x$, $g_y$, $g_z$), $E2_y$($f_{UL}$, $g_x$, $g_y$, $g_z$), and $E2_z$($f_{UL}$, $g_x$, $g_y$, $g_z$).

The network device obtains at least one weight matrix of the scanning spot based on the second electric field matrix E2 ($f_{UL}$, $g_x$, $g_y$, $g_z$) of each scanning spot. Weight matrices of all scanning spots constitute a weight set.

The following describes a manner of obtaining a weight matrix of a scanning spot by using an example in which the first scanning spot is any scanning spot in a plurality of scanning spots.

Example A2: Obtaining a weight matrix based on an electric field matrix of a scanning spot

A weight matrix of a first scanning spot may be a complex conjugate matrix of a second electric field matrix of the first scanning spot, and/or a normalized matrix of the complex conjugate matrix of the second electric field matrix of the first scanning spot. The precoding matrix is represented in a form shown in Table 4:

**Table 4**

| | $w(f_{UL}, g_x, g_y, g_z)$ |
|---|---|
| Example A2-1 | $E2^*(f_{UL}, g_x, g_y, g_z)$ |
| Example A2-2 | $\frac{E2^*(f_{UL}, g_x, g_y, g_z)}{\lvert E2(f_{UL}, g_x, g_y, g_z)\rvert}$ |

w($f_{UL}$, $g_x$, $g_y$, $g_z$) represents a weight matrix that is of the first scanning spot and that corresponds to an uplink carrier with a frequency of $I_{UL}$. * represents complex conjugation, and ‖ represents a modulus of a matrix/vector. A weight matrix in Example A2-2 is a result obtained by performing normalization on a weight matrix in Example A2-1.

Example B2: Obtaining a weight matrix based on an electric field spatial component

A weight matrix of a first scanning spot may be a complex conjugate matrix of at least one spatial component of the second electric field matrix of the first scanning spot, and/or a normalized matrix of the complex conjugate matrix of the at least one spatial component of the second electric field matrix of the first scanning spot. The precoding matrix is represented in a form shown in Table 5:

**Table 5**

| | $w_x(f_{UL}, g_x, g_y, g_z)$ | $w_y(f_{UL}, g_x, g_y, g_z)$ | $w_z(f_{UL}, g_x, G_y, g_z)$ |
|---|---|---|---|
| Example B2-1 | $E2_x^*(f_{UL}, g_x, g_y, g_z)$ | $E2_y^*(f_{UL}, g_x, g_y, g_z)$ | $E2_z^*(f_{UL}, g_x, g_y, g_z)$ |
| Example B2-2 | $\frac{E2_x^*(f_{UL}, g_x, g_y, g_z)}{\lvert E2_x(f_{UL}, g_x, g_y, g_z)\rvert}$ | $\frac{E2_y^*(f_{UL}, g_x, g_y, g_z)}{\lvert E2_y(f_{UL}, g_x, g_y, g_z)\rvert}$ | $\frac{E2_z^*(f_{UL}, g_x, g_y, g_z)}{\lvert E2_z(f_{UL}, g_x, g_y, g_z)\rvert}$ |

$w_x$($f_{UL}$, $g_x$, $g_y$, $g_z$), $w_y$($f_{UL}$, $g_x$, $g_y$, $g_z$), and $w_z$($f_{UL}$, $g_x$, $g_y$, $g_z$) respectively represent weight matrices that are obtained in directions x, y, and z, that are of the first scanning spot, and that correspond to an uplink carrier with a frequency of $f_{UL}$. * represents complex conjugation, and ‖ represents a modulus of a matrix/vector. Weight matrices in Example B2-2 are results obtained by performing normalization on weight matrices in Example B2-1.

It should be understood that, Example B2-1 and Example B2-2 in Table 2 are merely examples of obtaining a weight matrix based on an electric field spatial component, but are not any limitation. In actual application, for example, one or more electric field components in directions x, y, and z may be selected to obtain weight matrices of the first scanning spot, or an electric field component in another direction may be selected to obtain the weight matrix of the first scanning spot. This is not limited in this application. In addition, to further improve positioning accuracy of the PIM source, for each first scanning spot, more weight matrices may be selected, and the weight matrices may include but are not limited to the components in the three directions. This is not limited in this application.

Example C2: Obtaining a weight matrix based on electric field singular value decomposition (singular value decomposition, SVD)

A weight matrix of a first scanning spot may be a complex conjugate matrix of at least one eigenvector obtained through singular value decomposition SVD by the second electric field matrix of the first scanning spot.

For example, for each scanning spot ($g_x$, $g_y$, $g_z$), for an uplink carrier with a frequency of $f_{UL}$, C($f_{UL}$, $g_x$, $g_y$, $g_z$) = E2($f_{UL}$, $g_x$, $g_y$, $g_z$)$E2^H$($f_{UL}$, $g_x$, $g_y$, $g_z$) is defined, where H represents a conjugate transposition of a matrix. SVD decomposition of C($f_{UL}$, $g_x$, $g_y$, $g_z$) is represented as follows:

$$\mathrm{C} = \mathrm{U}\Lambda\mathrm{V}^{\mathrm{H}}$$

A diagonal of Λ includes three non-zero eigenvalues, which are respectively denoted as $\lambda_1$($f_{UL}$, $g_x$, $g_y$, $g_z$), $\lambda_2$ ($f_{UL}$, $g_x$, $g_y$, $g_z$), and $\lambda_3$ ($f_{UL}$, $g_x$, $g_y$, $g_z$) in descending order. Through SVD decomposition, eigenvectors corresponding to $\lambda_1$, $\lambda_2$, and $\lambda_3$ are respectively $v_1$($f_{UL}$, $g_x$, $g_y$, $g_z$), $v_2$ ($f_{UL}$, $g_x$, $g_y$, $g_z$), and $v_3$($f_{UL}$, $g_x$, $g_y$, $g_z$). The weight matrix is represented in a form shown in Table 6:

**Table 6**

| | $w_1(f_{UL}, g_x, g_y, g_z)$ | $w_2(f_{UL}, g_x, g_y, g_z)$ | $w_3(f_{UL}, g_x, g_y, g_z)$ |
|---|---|---|---|
| Example C2-1 | $v_1^*(f_{UL}, g_x, g_y, g_z)$ | $v_2^*(f_{UL}, g_x, g_y, g_z)$ | $v_3^*(f_{UL}, g_x, g_y, g_z)$ |
| * represents a complex conjugation. | | | |

Similar to Example B1, when the weight matrix is obtained based on the manner in Example C2, for each first scanning spot, $w_1$, $w_2$, and $w_3$ may be selected, or one or two of $w_1$, $w_2$, and $w_3$ may be selected. This is not limited in this application.

2. PIM source positioning method

Example 1: Downlink positioning method

Refer to FIG. 4. The PIM source positioning method performed by the network device includes the following steps.

S401: Obtain a parameter needed by an algorithm, including but not limited to the foregoing downlink configuration parameter.

S402: Set a plurality of scanning spots in a scanning area, where each scanning spot is denoted as ($g_x$, $g_y$, $g_z$).

S403: Obtain a precoding set.

The precoding set may include precoding matrices of all scanning spots set in S402. For a manner of obtaining the precoding set, refer to the foregoing related descriptions. Details are not described herein again. For different scanning spots, a same specification may be used to obtain precoding matrices of the scanning spots. A same specification means that manners of obtaining precoding matrices are the same. For example, an electric field space component manner is used, and complex conjugates of electric field components in directions x, y, and z are obtained as corresponding precoding matrices.

S404: In each scanning process on the first scanning spot, perform precoding processing on at least one downlink signal in a plurality of downlink signals based on at least one precoding matrix of the first scanning spot, and send, by using a transmit antenna, a plurality of downlink signals on which the precoding processing has been performed. The first scanning spot is any one of the plurality of scanning spots, frequencies of carriers on which any two of the plurality of downlink signals are carried are different.

In actual application, in a two-carrier or multi-carrier scenario, when precoding processing is performed on the plurality of downlink signals by using a precoding matrix, precoding processing may be performed on at least one of the plurality of downlink signals as needed. This is not limited in this application. A two-carrier scenario and PIM 3 interference are used as an example. The performing precoding processing on downlink signals carried on carriers of different frequencies may include the following cases:

Table 7

| | $DL_0$ | $DL_1$ |
|---|---|---|
| Case 1 | Precoding | Precoding |
| Case 2 | Precoding | No precoding |
| Case 3 | No precoding | Precoding |

"Precoding" in Table 7 indicates that in a scanning process, precoding processing is performed on a signal carried on a downlink carrier $DL_i$ based on a corresponding precoding matrix. "No precoding" indicates that in a scanning process, precoding processing is not performed on a signal carried on a downlink carrier $DL_i$ based on a corresponding precoding matrix. Herein, a to-be-sent downlink signal may be obtained in another manner, for example, a random signal of $N_{Tx} \times N_{sc}$ is directly generated. This is not limited in this application.

In a possible design, if the method is applied to a frequency domain system such as OFDM, a precoding processing process for a signal of a downlink carrier $DL_i$ with a frequency of $f_i$ may be implemented by using the following expression:

$$\tilde{X}_{DLi} = w(f_i, g_x, g_y, g_z)\tilde{x}_{ele,i}$$

$w(f_i, g_x, g_y, g_z)$ represents a precoding matrix that is of a first scanning spot $(g_x, g_y, g_z)$ and that corresponds to a frequency $f_i$. The precoding matrix is a matrix of $N_{Tx} \times N_0$, $N_{Tx}$ is a quantity of transmit antennas, $N_0$ is a quantity of column vectors in the precoding matrix, a value of $N_0$ may be $N_0$ = 1,2,3 ... M, and M is a positive integer. For example, in the case of Example A1, it may be $N_0$ = 3. In the case of Example B1 or Example C1, it may be $N_0$ = 1,2,3. In the case of Example B1, when more directions are selected to obtain electric field components, it may be $N_0$ = 1,2,3 ... M, where M is a positive integer. $\tilde{x}_{ele,i}$ is a matrix of $N_0 \times N_{sc}$, $\tilde{x}_{ele,i}$ represents a frequency domain signal of a downlink carrier $DL_i$, and $N_{sc}$ is a quantity of subcarriers. $\tilde{X}_{DLi}$ represents a downlink signal of a downlink carrier $DL_i$ after precoding processing, $\tilde{X}_{DL}$, is a matrix of $N_{Tx} \times N_{sc}$, and is a frequency domain downlink baseband signal of a multi-antenna system corresponding to the downlink carrier $DL_i$, and each row in $\tilde{X}_{DLi}$ corresponds to a transmit signal of a transmit antenna.

In another possible design, if the method is applied to a time domain system, a precoding processing process for a signal of a downlink carrier $DL_i$ with a frequency of $f_i$ may be implemented by using the following expression:

$$X_{DLi} = w(f_i, g_x, g_y, g_z)x_{ele,i}$$

$w(f_i, g_x, g_y, g_z)$ represents a precoding matrix that is of a first scanning spot $(g_x, g_y, g_z)$ and that corresponds to a frequency $f_i$. The precoding matrix is a matrix of $N_{Tx} \times N_0$, $N_{Tx}$ is a quantity of transmit antennas, $N_0$ is a quantity of column vectors in the precoding matrix. Similar to related descriptions in the frequency domain system, a value of $N_0$ may be $N_0$ = 1,2,3 ... M, where M is a positive integer. For example, in the case of Example A1, it may be $N_0$ = 3, and in the case of Example B1 or Example C1, it may be $N_0$ = 1,2,3. $x_{ele,i}$ is a matrix of $N_0 \times N_{sp}$, $x_{ele,i}$ represents a time domain signal of a downlink carrier $DL_i$, and $N_{sp}$ is a quantity of sampling spots. $X_{DLi}$ represents a downlink signal of a downlink carrier $DL_i$ after precoding processing, $X_{DLi}$ is a matrix of $N_{Tx} \times N_{sp}$, and is a frequency domain downlink baseband signal of a multi-antenna system corresponding to the downlink carrier $DL_i$, and each row in $X_{DLi}$ corresponds to a transmit signal of a transmit antenna.

The plurality of downlink signals sent by using the transmit antenna in S404 arrive at a PIM source through a downlink channel, and an uplink PIM signal is generated through excitation at the PIM source. The uplink PIM signal arrives at a receive antenna through an uplink channel. If a frequency of the uplink PIM signal exactly falls within a receive frequency range of the receive antenna, the receive antenna receives the uplink PIM signal. The network device performs precoding processing on the at least one of the plurality of downlink signals based on the precoding matrix corresponding to the scanning spot in S404, so that powers of PIM signals generated by excitation by the plurality of downlink signals at the scanning spot and a PIM source near the scanning spot can be increased.

S405: Receive an uplink PIM signal for the first scanning spot by using a receive antenna.

S406: Determine whether all scanning spots are traversed. If all scanning spots are not traversed, return to S404. If all scanning spots are traversed, proceed to S407. Herein, traversing all scanning spots means that steps S404 and S405 are completed once for each precoding matrix of each scanning spot. It should be noted that in this embodiment, in a scanning process for each scanning spot, each time precoding processing is performed on at least one downlink signal in the plurality of downlink signals, precoding processing is separately performed on downlink signals corresponding to corresponding frequencies based on precoding matrices respectively corresponding to different frequencies. The quantity of scanning times on the first scanning spot may be determined based on a quantity of precoding matrices that are of the first scanning spot and that correspond to at least one downlink carrier frequency. For example, a scanning process on the first scanning spot may be as follows: performing, based on one precoding matrix that is of the first scanning spot and that corresponds to the frequency fi, precoding processing on a downlink signal corresponding to the frequency fi in the plurality of downlink signals, and receiving uplink PIM signals corresponding to the plurality of downlink signals. Correspondingly, a quantity of scanning times on the first scanning spot may be equal to a quantity of precoding matrices that are of the first scanning spot and that correspond to the frequency fi.

S407: Determine a PIM source from the plurality of scanning spots based on uplink PIM signals respectively corresponding to the plurality of scanning spots.

In a possible design, S407 includes: The network device determines, by using the following steps, first power values respectively corresponding to the plurality of scanning spots: determining, based on a sum of receive powers of a plurality of receive antennas in each scanning process on the first scanning spot, an uplink PIM signal receive power corresponding to the precoding matrix; and determining, based on the uplink PIM signal receive power obtained in at least one scanning process on the first scanning spot, a first power value corresponding to the first scanning spot. The network device determines, from the plurality of scanning spots, at least one target scanning spot whose first power value meets a first condition, and determines the target scanning spot as the PIM source.

Specifically, for each first scanning spot ($g_x$, $g_y$, $g_z$), based on a plurality of downlink signals that are obtained and sent after precoding processing is performed on each precoding matrix $w_k(f_i, g_x, g_y, g_z)$ of the first scanning spot, an uplink PIM signal generated by excitation is denoted as $y_k(g_x, g_y, g_z)$, k = 1,2,⋯, , N, where N represents a quantity of precoding matrices corresponding to one first scanning spot. For each precoding matrix $W_k(f_i, g_x, g_y, g_z)$, a power $P_k(g_x, g_y, g_z)$ of the uplink PIM signal is a sum of receive powers of all receive antennas. A quantity of uplink PIM signal receive powers $P_k$ corresponding to each first scanning spot is determined based on a quantity of times of scanning performed on the first scanning spot, and the quantity of scanning times on the first scanning spot is determined based on a quantity of precoding matrices of the first scanning spot. In an example, in a case in which precoding matrices $w_x$, $w_y$, $w_z$ of the scanning spot are obtained based on the electric field space component, a quantity of precoding matrices of the first scanning spot is N = 3, and each of the three precoding matrices is used to perform one scanning process. In this case, a quantity of times of scanning on the first scanning spot is 3, and powers of uplink PIM signals corresponding to the precoding matrices $w_x$, $w_y$, $w_z$ are respectively $P_x$, $P_y$, and $P_z$.

In a possible design, the first power value is: a maximum value of the uplink PIM signal receive power corresponding to the at least one scanning process on the first scanning spot. For example, for each first scanning spot ($g_x$, $g_y$, $g_z$), an uplink PIM signal receive power that is of the first scanning spot and that corresponds to each precoding matrix corresponding to a frequency $f_i$ is represented as $P_k(g_x, g_y, g_z)$, k = 1, 2, ⋯, and N, and a first power value corresponding to the first scanning spot is:

$$P_{max}(g_x, g_y, g_z) = \max(P_k(g_x, g_y, g_z)).$$

In another possible design, the first power value is: an average value of the uplink PIM signal receive power corresponding to the at least one scanning process on the first scanning spot. For example, for each first scanning spot ($g_x$, $g_y$, $g_z$), an uplink PIM signal receive power that is of the first scanning spot and that corresponds to each precoding matrix corresponding to a frequency $f_i$ is represented as $P_k(g_x, g_y, g_z)$, k = 1,2, ⋯, and N, and a first power value corresponding to the first scanning spot is:

$$P_{ave}(g_x, g_y, g_z) = \frac{1}{N}\sum_k P_k(g_x, g_y, g_z).$$

After traversing all the scanning spots and obtaining the uplink PIM signals and the first power values corresponding to all the scanning spots, the network device may perform analysis and determining, in a plurality of implementations, on the first power values respectively corresponding to the plurality of scanning spots, to determine the PIM source in the plurality of scanning spots. It should be noted that, in this embodiment, the downlink signal is processed based on the at least one precoding matrix that is of the first scanning spot and that corresponds to different downlink carrier frequencies to implement the scanning process. Therefore, the first power value corresponding to the first scanning spot may be a maximum value of the uplink PIM signal receive power corresponding to the at least one precoding matrix of the first scanning spot, or an average value of uplink PIM signal receive power corresponding to the at least one precoding matrix of the first scanning spot. This is not limited in this application.

In a possible design, each scanning spot corresponds to one first power value, for example, $P_{max}(g_x, g_y, g_z)$ or $P_{ave}(g_x, g_y, g_z)$. The first condition that the PIM source should meet and that may be set by the network device includes: The first power value is a maximum value, and the first power value is greater than or equal to a set first threshold. The network device may determine a maximum value (or referred to as a local maximum value) from first power values of a plurality of scanning spots, and then compare a first power value corresponding to the maximum value with the set first threshold. If the first power value is greater than or equal to the first threshold, the network device determines a scanning spot corresponding to the first power value as a target scanning spot, and determines the target scanning spot as the PIM source. If the target scanning spot is determined as the PIM source, it may indicate that the scanning spot is a PIM source, or may indicate that a PIM source exists in a grid corresponding to the scanning spot. If the maximum value is not obtained or the first power value corresponding to the maximum value is less than the set first threshold, it may be considered that no PIM source exists in all scanning spots, in other words, no PIM source exists in a current scanning area.

In another possible design, each scanning spot corresponds to one first power value, for example, $P_{max}$ ($g_x$, $g_y$, $g_z$) or $P_{ave}$ ($g_x$, $g_y$, $g_z$). The first condition that the PIM source should meet and that may be set by the network device includes: The first power value belongs to a first area in a power distribution image, where the power distribution image is obtained based on the first power values of the plurality of scanning spots, and the first area is an area whose power value is greater than the first threshold. The network device may represent the first power values of the scanning spots by using a grid color, and obtain power distribution images of all the scanning spots based on first power values of all the scanning spots. For example, red represents a maximum first power value or a first power value that belongs to a maximum interval, blue represents a minimum first power value or a first power value that belongs to a minimum interval, and a color transition between red and blue represents a first power value that is between the maximum interval and the minimum interval. After the power distribution images of all the scanning spots are obtained, determining is performed in the power distribution image based on the grid color. An area whose power value is clearly greater than a surrounding area is considered as a maximum value area, and an area whose power value is greater than or equal to a set first threshold in the maximum value area is determined as a first area, and it is considered that a PIM source exists in the first area. If there is no maximum value area or no first area in the power distribution image, it may be considered that there is no PIM source in all scanning spots, in other words, there is no PIM source in the current scanning area.

Example 2: Uplink positioning method

Refer to FIG. 5. The PIM source positioning method performed by the network device includes the following steps.

S501: Obtain a parameter needed by an algorithm, including but not limited to the foregoing uplink configuration parameter.

S502: Set a plurality of scanning spots in a scanning area, where each scanning spot is denoted as ($g_x$, $g_y$, $g_z$).

S503: Obtain a weight set.

The weight set may include weight matrices of all scanning spots set in S502. For a manner of obtaining the weight set, refer to the foregoing related descriptions. Details are not described herein again. For different scanning spots, a same specification may be used to obtain weight matrices of the scanning spots. A same specification means that manners of obtaining weight matrices are the same. For example, an electric field space component manner is used, and complex conjugates of electric field components in directions x, y, and z are obtained as corresponding weight matrices.

S504: Send a plurality of downlink signals with different frequencies by using a transmit antenna, and receive an uplink PIM signal by using a receive antenna. Frequencies of carriers on which any two of the plurality of downlink signals are carried are different. The plurality of downlink signals may be directly generated random signals. In a frequency domain system, the plurality of downlink signals may be random signals of $N_{Tx} \times N_{sc}$, where $N_{Tx}$ is a quantity of transmit antennas, and $N_{sc}$ is a quantity of subcarriers. In a time domain system, the plurality of downlink signals may be random signals of $N_{Tx} \times N_{sp}$, where $N_{Tx}$ is a quantity of transmit antennas, and $N_{sp}$ is a quantity of sampling spots.

The uplink PIM signal is generated by excitation by any at least two downlink signals in the plurality of downlink signals. The plurality of downlink signals arrive at a PIM source through a downlink channel, and an uplink PIM signal is generated through excitation at the PIM source. The uplink PIM signal arrives at a receive antenna through an uplink channel. If a frequency of the uplink PIM signal exactly falls within a receive frequency range of the receive antenna, the receive antenna receives the uplink PIM signal. Y represents an uplink PIM signal. Y corresponds to a downlink signal, and Y may be represented as a matrix of $N_{Rx} \times N_{sc}$. In a time domain system, Y may be represented as a matrix of $N_{Rx} \times N_{sp}$. $N_{Rx}$ is the quantity of receive antennas, $N_{sc}$ is the quantity of subcarriers, and $N_{sp}$ is the quantity of sampling spots.

S505: Perform, in one scanning process on the first scanning spot based on a weight matrix of the first scanning spot, weighted summation processing on uplink PIM signals received by the plurality of receive antennas, to obtain a first signal, and determine a power of the first signal.

In a possible design, for each first scanning spot ($g_x$, $g_y$, $g_z$), each weight matrix of the first scanning spot may be represented as $W_k(f_{UL}, g_x, g_y, g_z)$, k = 1,2, ⋯ , N, where N represents a quantity of weight matrices corresponding to one first scanning spot. For an uplink carrier UL with a frequency of $f_{UL}$, a weighted summation processing process may be implemented by using the following expression:

$$z_k(g_x, g_y, g_z) = w_k(f_{UL}, g_x, g_y, g_z)^T Y$$

$W_k(f_{UL}, g_x, g_y, g_z)$ represents a weight matrix that is of the first scanning spot $(g_x, g_y, g_z)$ and that corresponds to the frequency $f_{UL}$; T represents matrix/vector rotation; Y represents an uplink PIM signal received by each receive antenna; $Z_k(g_x, g_y, g_z)$ represents a first signal corresponding to the first scanning spot $(g_x, g_y, g_z)$, and $k = 1,2, \cdots, N$, where N represents a quantity of weight matrices corresponding to one first scanning spot. In a frequency domain system, Y may be represented as a matrix of $N_{Rx} \times N_{sc}$, the first signal $Z_k(g_x, g_y, g_z)$ is a matrix of $N_0 \times N_{sc}$, and $N_{sc}$ is a quantity of subcarriers. In a time domain system, Y may be represented as a matrix of $N_{Rx} \times N_{sp}$, the first signal $z_k(g_x, g_y, g_z)$ is a matrix of $N_0 \times N_{sp}$, and $N_{sp}$ is a quantity of sampling spots. For a meaning of $N_0$, refer to the foregoing related descriptions. Details are not described herein again. It should be noted that, in this embodiment, a quantity of scanning times of the first scanning spot is determined based on a quantity of weight matrices of the first scanning spot. Because weighted summation processing is performed on the uplink PIM signal based on the weight matrix in this embodiment, one scanning process on the first scanning spot may include: performing, based on a weight matrix of the first scanning spot, weighted summation processing on uplink PIM signals received by the plurality of receive antennas, and obtaining a first signal and a power of the first signal. Correspondingly, a quantity of scanning times on the first scanning spot equals to a quantity of weight matrices of the first scanning spot.

S506: Determine whether all scanning spots are traversed. If all scanning spots are not traversed, return to S505. If all scanning spots are traversed, proceed to S507. Herein, traversing all scanning spots means that step S505 is completed once for each weight matrix of each scanning spot.

S507: Determine, based on the power of the first signal obtained in at least one scanning process on the first scanning spot, a first power value corresponding to the first scanning spot; determine, from the plurality of scanning spots, at least one target scanning spot whose first power value meets a first condition; and determine the target scanning spot as the PIM source.

Specifically, for each first scanning spot $(g_x, g_y, g_z)$, each weight matrix of the first scanning spot may be represented as $w_k(f_{UL}, g_x, g_y, g_z)$, $k = 1,2, \cdots, N$, where N represents a quantity of weight matrices corresponding to one first scanning spot. A power of a first signal $Z_k(g_x, g_y, g_z)$ corresponding to the weight matrix $W_k(f_{UL}, g_x, g_y, g_z)$ is represented as $P_k(g_x, g_y, g_z)$. A quantity of powers $P_k$ of the first signals corresponding to each first scanning spot is determined based on a quantity of times of scanning performed on the first scanning spot, and the quantity of scanning times of the first scanning spot is determined based on a quantity of weight matrices of the first scanning spot. In an example, in a case in which precoding matrices $w_x$, $w_y$, $w_z$ of the scanning spot are obtained based on the electric field space component in Example B1, a quantity of precoding matrices of the first scanning spot is N = 3, and each of the three precoding matrices is used to perform one scanning process. In this case, a quantity of times of scanning on the first scanning spot is 3, and powers of first signals corresponding to the precoding matrices $w_x$, $w_y$, $w_z$ are respectively $P_x$, $P_y$, and $P_z$.

In a possible design, the first power value is: a maximum power of the first signal corresponding to the at least one scanning process on the first scanning spot (or at least one weight matrix). The first power value corresponding to the first scanning spot $(g_x, g_y, g_z)$ may be represented as follows:

$$P_{max}(g_x, g_y, g_z) = \max(P_k(g_x, g_y, g_z)).$$

In a possible design, the first power value is: an average power of the first signal corresponding to the at least one scanning process on the first scanning spot (or at least one weight matrix). The first power value corresponding to the first scanning spot $(g_x, g_y, g_z)$ may be represented as follows:

$$P_{ave}(g_x, g_y, g_z) = \frac{1}{N}\sum_k P_k(g_x, g_y, g_z).$$

After traversing all the scanning spots and obtaining the first signals and the first power values corresponding to all the scanning spots, the network device may perform analysis and determining, in a plurality of implementations, on the first power values respectively corresponding to the plurality of scanning spots, to determine the PIM source in the plurality of scanning spots. Specifically, refer to the foregoing related descriptions with reference to FIG. 4. Details are not described herein again.

Example 3: Downlink + uplink positioning method

Refer to FIG. 6. The PIM source positioning method performed by the network device includes the following steps.

S601: Obtain a parameter needed by an algorithm, including but not limited to the foregoing downlink configuration parameter and uplink configuration parameter.

S602: Set a plurality of scanning spots in a scanning area, where each scanning spot is denoted as $(g_x, g_y, g_z)$.

S603: Obtain a precoding set and a weight set.

The precoding set may include precoding matrices of all scanning spots set in S602. The weight set may include weight matrices of all scanning spots set in S602. For a manner of obtaining the precoding set and the weight set, refer to the foregoing related descriptions. Details are not described herein again. For different scanning spots, a same specification may be used to obtain precoding matrices and weight matrices of the scanning spots, or different specifications may be used to obtain precoding matrices and/or weight matrices of the scanning spots. This is not limited in this application.

S604: In each scanning process on the first scanning spot, perform precoding processing on at least one downlink signal in a plurality of downlink signals based on at least one precoding matrix of the first scanning spot, and send, by using a transmit antenna, a plurality of downlink signals on which the precoding processing has been performed. The first scanning spot is any one of the plurality of scanning spots, frequencies of carriers on which any two of the plurality of downlink signals are carried are different. Specifically, refer to the related descriptions in S404. Details are not described herein again.

The plurality of downlink signals arrive at a PIM source through a downlink channel, and an uplink PIM signal is generated through excitation at the PIM source. The uplink PIM signal arrives at a receive antenna through an uplink channel. If a frequency of the uplink PIM signal exactly falls within a receive frequency range of the receive antenna, the receive antenna receives the uplink PIM signal. The network device performs precoding processing on the at least one of the plurality of downlink signals based on the at least one precoding matrix corresponding to the scanning spot in S604, so that powers of PIM signals generated by excitation by the plurality of downlink signals at the scanning spot and a PIM source near the scanning spot can be increased.

S605: Receive an uplink PIM signal for the first scanning spot by using a receive antenna.

S606: Perform, in each scanning process on the first scanning spot based on a weight matrix of the first scanning spot, weighted summation processing on uplink PIM signals received by the plurality of receive antennas, to obtain a first signal, and determine a power of the first signal. Specifically, for the weighted summation processing, refer to the related descriptions in S505. Details are not described herein again.

It should be noted that, in this embodiment, a quantity of scanning times on the first scanning spot is determined based on a quantity of precoding matrices and weight matrices of the first scanning spot. In this embodiment, because precoding processing is performed on the plurality of downlink signals based on the precoding matrix, and weighted summation processing is performed on the uplink PIM signal based on the weight matrix, one scanning of the first scanning spot may be: performing, based on one precoding matrix that is of the first scanning spot and that corresponds to the frequency fi, precoding processing on a downlink signal corresponding to the frequency fi in the plurality of downlink signals, sending the downlink signals, performing, based on a weight matrix of the first scanning spot, weighted summation processing on uplink PIM signals received by the plurality of receive antennas, and obtaining a first signal and a power of the first signal. For example, if the quantity of precoding matrices of the first scanning spot corresponding to the frequency fi is 3, and the quantity of weight matrices is 3, the quantity of scanning times on the first scanning spot is 3×3, namely, 9 times.

S607: Determine whether all scanning spots are traversed. If all scanning spots are not traversed, return to S604. If all scanning spots are traversed, proceed to S608. Herein, traversing all scanning spots means that steps S604 to S606 are completed once for each precoding matrix and each corresponding weight matrix of each scanning spot.

S608: Determine, based on the power of the first signal obtained in at least one scanning process on the first scanning spot, a first power value corresponding to the first scanning spot, determine, from the plurality of scanning spots, at least one target scanning spot whose first power value meets a first condition; and determine the target scanning spot as the PIM source. Specifically, refer to the related descriptions in S507. Details are not described herein again. It should be noted that, a quantity of powers $P_k$ of the first signals corresponding to each first scanning spot is determined based on a quantity of times of scanning performed on the first scanning spot, and the quantity of scanning times on the first scanning spot is determined based on a quantity of precoding matrices and weight matrices of the first scanning spot. For example, if the quantity of precoding matrices of the first scanning spot is 3, and the quantity of weight matrices is 3, the quantity of scanning times on the first scanning spot is 3×3, namely, 9 times. Correspondingly, powers of nine first signals are obtained.

After traversing all the scanning spots and obtaining the first signals and the first power values respectively corresponding to all the scanning spots, the network device may perform analysis and determining, in a plurality of implementations, on the first power values of the plurality of scanning spots, to determine the PIM source in the plurality of scanning spots. Specifically, refer to the foregoing related descriptions with reference to FIG. 4. Details are not described herein again.

With reference to the method flowcharts shown in FIG. 4 to FIG. 6, detailed steps of the PIM source positioning method in embodiments of this application are described. According to the PIM source positioning solution, there is no need to rely on an external device, and based on existing wireless communication system hardware, algorithm-related calculation is performed by using a BBU, a scanning spot is associated with a downlink signal sent by a network device by using a transmit antenna and/or an uplink PIM signal received by the network device, and analysis and determining are performed on the uplink PIM signal, to implement PIM source positioning. This solution is easy to implement, and an application scope is no longer limited by a working mechanism of the external device. In addition, because no external device is needed, costs of using the external device can be saved. In addition, by using this solution, an antenna near which the PIM source is specifically located can be positioned, and positioning accuracy is high.

In this embodiment of this application, after determining the PIM source from the plurality of scanning spots, the network device may further estimate an interference channel based on the scanning spot determined as the PIM source. Interference channel estimation is applied more widely, for example, in interference suppression.

For example, the network device may perform the following steps for a second scanning spot that is in the plurality of scanning spots and that is determined as the PIM source: recording location information of the second scanning spot into a PIM source location set, and obtaining, based on the second scanning spot, downlink interference channel information from the transmit antenna to the PIM source and/or uplink interference channel information from the PIM source to the receive antenna. For example, the network device may use at least one precoding matrix of the second scanning spot as the downlink interference channel information, or may use at least one weight matrix of the second scanning spot as the uplink interference channel information.

Locations of all PIM sources in a scanning area may be learned of based on the PIM source location set. Further, if the PIM source is a fault that can be checked and repaired, the PIM source may be checked and repaired based on the obtained PIM source location information.

Alternatively, the network device may effectively suppress a passive inter-modulation signal at a downlink transmit end based on the obtained downlink interference channel information. Alternatively, the network device may effectively suppress a passive inter-modulation signal at an uplink receive end based on the obtained uplink interference channel information. In this way, generation of the passive inter-modulation interference signal can be avoided, and interference from the passive inter-modulation signal to an uplink receive signal can be eliminated, so that performance of a communication system is effectively improved and radio resource utilization is improved.

In this embodiment of this application, positions of all PIM sources in the scanning area may also be provided based on the foregoing PIM source positioning methods in FIG. 4 to FIG. 6 and with reference to a method for suppressing a signal at a position at which a PIM source is most likely to exist. The following provides detailed descriptions with reference to the method flowcharts shown in FIG. 7 to FIG. 8. It should be noted that, in the method flowcharts shown in FIG. 7 to FIG. 8, specific implementations of some method steps may be different from the foregoing method steps in FIG. 4 to FIG. 6. For details, refer to related descriptions below.

Refer to FIG. 7. The PIM source positioning method performed by the network device includes the following steps.

S701: Estimate a first quantity $N_{PIM}$ of PIM sources in a scanning area.

In this embodiment of this application, the first quantity of the PIM sources in the scanning area may be estimated in a plurality of implementations. This is not limited in this application.

In a possible design, the network device may send a plurality of downlink signals by using a transmit antenna, and any two of the plurality of downlink signals are carried on different carriers at different frequencies. The network device transmits a full-rank random signal of $N_{Tx} \times N_{sc}$ for each downlink carrier $DL_i$, performs SVD decomposition on an uplink receive signal, and estimates the first quantity $N_{PIM}$ of the PIM sources in the scanning area based on distribution of eigenvalues.

In another possible design, the network device may estimate, according to the methods shown in FIG. 4 to FIG. 6, the first quantity $N_{PIM}$ of the PIM sources in the scanning area based on an output power distribution image of all scanning spots in the scanning area or a quantity of local maximum values in first power values of all scanning spots in the scanning area.

S702: Obtain a precoding set and/or a weight set for the plurality of scanning spots in the scanning area, and sequentially perform a corresponding scanning process on each first scanning spot in the plurality of scanning spots based on the obtained precoding set and/or weight set, to obtain uplink PIM signals (or first signals obtained through processing) and first power values that are respectively corresponding to the plurality of scanning spots. Specifically, traversal scanning may be performed on the plurality of scanning spots in the scanning area according to any method in FIG. 4 to FIG. 6, to obtain uplink PIM signals (or first signals obtained through processing) and first power values corresponding to the plurality of scanning spots. Specifically, refer to the foregoing related descriptions. Details are not described herein again.

S703: Determine, from the plurality of scanning spots, a target scanning spot whose first power value meets a second condition, and determine the target scanning spot as a PIM source. In a possible design, the second condition includes: The first power value is a maximum value.

Each scanning spot corresponds to one first power value, and each first power value is determined based on a power of a signal corresponding to at least one scanning process on the scanning spot. Based on different methods used in S702, the first power value may be represented in different manners. For example, the first power value is: a maximum value of the uplink PIM signal receive power corresponding to the at least one scanning process on the first scanning spot,

$P_{max}(g_x, g_y, g_z) = max(P_k(g_x, g_y, g_z))$. Alternatively, the first power value is: an average value of the uplink PIM signal receive power corresponding to the at least one scanning process on the first scanning spot, $P_{ave}(g_x, g_y, g_z) = \frac{1}{N}\sum_k P_k(g_x, g_y, g_z)$. Alternatively, the first power value is: a maximum power of the first signal corresponding to the at least one scanning process on the first scanning spot, $P_{max}(g_x, g_y, g_z) = max(P_k(g_x, g_y, g_z))$. Alternatively, the first power value is: an average power of the first signal corresponding to the at least one scanning process on the first scanning spot, $P_{ave}(g_x, g_y, g_z) = \frac{1}{N}\sum_k P_k(g_x, g_y, g_z)$. For details, refer to the foregoing related descriptions. Details are not described herein again. In a possible design, the second condition includes: The first power value is a maximum value. In other words, after the plurality of scanning spots are traversed, and the uplink PIM signals (or the first signals obtained through processing) and the first power values corresponding to the plurality of scanning spots are obtained, a position of a scanning spot corresponding to the maximum value in the plurality of first power values is considered as a position at which the PIM source is most likely to exist.

S704: Record location information of the target scanning spot as $\bar{x}_{PIM}$ and record the position information in a PIM source location set $X_{PIM}$, record a precoding matrix of the target scanning spot as $w_{PIM}$ and record the precoding matrix in a PIM source precoding set $W_{PIM}$, and/or record a weight matrix of the target scanning spot as $w_{PIM}$ and record the weight matrix in a PIM source weight set $W_{PIM}$. The detailed step is determined based on the method used in S702.

S705: Determine whether a quantity of PIM sources in the PIM source location set is equal to a first quantity. If the quantity of PIM sources in the PIM source location set is less than the first quantity, proceed to S706. If the quantity of PIM sources in the PIM source location set is equal to the first quantity, proceed to S707.

S706: Update the precoding set based on the PIM source precoding set, and/or update the weight set based on the PIM source weight set. Then, based on the updated precoding set and/or the updated weight set, S702 to S705 are performed again until the quantity of PIM sources in the PIM source location set is equal to the first quantity.

S707: Output the PIM source location set. The PIM source location set includes location information of all PIM sources in the scanning area.

Because there may be different implementation processes in S702, update may be correspondingly performed in S706 for different cases. The following uses a two-carrier scenario and third-order inter-modulation PIM 3 as an example for description with reference to different cases.

$W_{PIM}$ represents a PIM source precoding set and/or a PIM source weight set, $W_{PIM}$ is a matrix of $N_{Tx} \times N_w$ or $N_{Rx} \times N_w$, $N_{Tx}$ represents a quantity of transmit antennas, $N_{Rx}$ represents a quantity of receive antennas, $N_w$ represents a quantity of column vectors of all precoding matrices and/or weight matrices in $W_{PIM}$, and each column of $W_{PIM}$ represents a column vector of a precoding matrix or a weight matrix. For example, in the case shown in the foregoing Example A1/A2, the precoding matrix of each scanning spot is a matrix of $N_{Tx} \times 3$ or $N_{Rx} \times 3$, and correspondingly, in $W_{PIM}$, $N_w = I * 3$, where I is a quantity of scanning spots, and * represents a product. For example, in the case shown in the foregoing Example B1/B2/C1/C2, the precoding matrix of each scanning spot is a matrix of $N_{Tx} \times N_0$ or $N_{Rx} \times N_0$, and correspondingly, in $W_{PIM}$, $N_w = I * N_0$, where I is a quantity of scanning spots, and * represents a product. $N_0$ is a quantity of column vectors of each precoding matrix or weight matrix, where $N_0$ = 1,2,3. If dimensions of column vectors of different precoding matrices or weight matrices are different, corresponding values of $N_0$ are different. $N_w$ represents a sum of column vectors of precoding matrices or weight matrices of all scanning spots.

Specific meanings of $W_{PIM}$ may be classified into the following types:

Type 1: In S702, the downlink positioning method shown in FIG. 4 is used to obtain the first power values of the plurality of scanning spots. Specific meanings of $W_{PIM}$ include the following cases:

Case 1: Signals of the downlink carriers $DL_0$ and $DL_1$ are precoded based on the precoding matrices, where $W_{PIM}$ represents the PIM source precoding set, and specifically includes $W_{PIM}(DL_0)$ corresponding to $DL_0$, and $W_{PIM}(DL_1)$ corresponding to $DL_1$.

Case 2: A signal of the downlink carrier $DL_0$ is precoded, and a signal of the downlink carrier $DL_1$ is not precoded based on a precoding matrix, where $W_{PIM}$ represents a PIM source precoding set, and specifically includes $W_{PIM}(DL_0)$ corresponding to $DL_0$.

Case 3: A signal of the downlink carrier $DL_1$ is precoded, and a signal of the downlink carrier $DL_0$ is not precoded based on a precoding matrix, where $W_{PIM}$ represents a PIM source precoding set, and specifically includes $W_{PIM}(DL_1)$ corresponding to $DL_1$.

Type 2: In S702, the uplink positioning method shown in FIG. 5 is used to obtain the first power values of the plurality of scanning spots. Specific meanings of $W_{PIM}$ is that: $W_{PIM}$ represents the PIM source weight set, and is denoted as $W_{PIM}(UL)$.

Type 3: In S702, the uplink + downlink positioning method shown in FIG. 6 is used to obtain the first power values of the plurality of scanning spots, and $W_{PIM}$ is divided into $W_{PIM}(DL_0)$, $W_{PIM}(DL_1)$, and $W_{PIM}(UL)$. Similar to the foregoing type 1, actual situations of $W_{PIM}(DL_0)$ and $W_{PIM}(DL_1)$ are related to whether to perform precoding processing on the signal of the downlink carrier. For details, refer to the three cases of type 1, and details are not described herein again.

Correspondingly, based on different meanings of $W_{PIM}$, updating the precoding set based on the PIM source precoding set, and/or updating the weight set based on the PIM source weight set in S706 may specifically include different implementations. Details are as follows:

Type 1: In S702, when the downlink positioning method in FIG. 4 is used to obtain the first power values of the plurality of scanning spots, the updating the precoding set based on the PIM source precoding set in S706 includes: after performing orthogonalization processing (for example, Gram-Schmidt orthogonalization processing) on the precoding matrix in the PIM source precoding set, removing a projection of each precoding matrix in the precoding set in the PIM source precoding set. Details are as follows:

Case 1: Signals of the downlink carriers $DL_0$ and $DL_1$ are precoded based on the precoding matrices, where $W_{PIM}$ represents the PIM source precoding set, and specifically includes $W_{PIM}(DL_0)$ corresponding to $DL_0$, and $W_{PIM}(DL_1)$ corresponding to $DL_1$. S706 includes:

1. Perform Gram-Schmidt orthogonalization processing is performed on (each column of) the precoding matrix in $W_{PIM}(DL_0)$, and denote as $W^{O}_{PIM}(DL_0)$, so that (each column of) each precoding matrix in $W^{O}_{PIM}(DL_0)$ is orthogonal and has a normalized modulus; and perform Gram-Schmidt orthogonalization processing on (each column of) the precoding matrix in $W_{PIM}(DL_1)$, and denote as $W^{O}_{PIM}(DL_1)$, so that (each column of) each precoding matrix in $W^{O}_{PIM}(DL_1)$ is orthogonal and has a normalized modulus.

2. For each precoding matrix $w_k(f_0, g_x, g_y, g_z)$ of $DL_0$, a projection in $W^{O}_{PIM}(DL_0)$ is removed, and a new precoding matrix is: $w'_k(f_0, g_x, g_y, g_z) = w_k(f_0, g_x, g_y, g_z) - W^{O}_{PIM}(DL_0)W^{O}_{PIM}(DL_0)^H w_k(f_0, g_x, g_y, g_z)$. For each precoding matrix $w_k(f_1, g_x, g_y, g_z)$ of $DL_1$, perform the same processing, to be specific, a projection in $W^{O}_{PIM}(DL_1)$ is removed, and a new precoding matrix is: $w'_k(f_1, g_x, g_y, g_z) = w_k(f_1, g_x, g_y, g_z) - W^{O}_{PIM}(DL_1)W^{O}_{PIM}(DL_1)^H w_k(f_1, g_x, g_y, g_z)$. H represents conjugate transposition.

Case 2: A signal of the downlink carrier $DL_0$ is precoded, and a signal of the downlink carrier $DL_1$ is not precoded based on a precoding matrix, where $W_{PIM}$ represents a PIM source precoding set, and specifically includes $W_{PIM}(DL_0)$ corresponding to $DL_0$. S706 includes:

1. Perform Gram-Schmidt orthogonalization processing is performed on (each column of) the precoding matrix in $W_{PIM}(DL_0)$, and denote as $W^{O}_{PIM}(DL_0)$, so that (each column of) each precoding matrix in $W^{O}_{PIM}(DL_0)$ is orthogonal and has a normalized modulus.

2. For each precoding matrix $W_k(f_0, g_x, g_y, g_z)$ of $DL_0$, a projection in $W^{O}_{PIM}(DL_0)$ is removed, and a new precoding matrix is: $w'_k(f_0, g_x, g_y, g_z) = w_k(f_0, g_x, g_y, g_z) - W^{O}_{PIM}(DL_0)W^{O}_{PIM}(DL_0)^H w_k(f_0, g_x, g_y, g_z)$. H represents conjugate transposition.

Case 3: A signal of the downlink carrier $DL_1$ is precoded, and a signal of the downlink carrier $DL_0$ is not precoded based on a precoding matrix, where $W_{PIM}$ represents a PIM source precoding set, and specifically includes $W_{PIM}(DL_1)$ corresponding to $DL_1$. S706 includes:

1. Perform Gram-Schmidt orthogonalization processing is performed on (each column of) the precoding matrix in $W_{PIM}(DL_1)$, and denote as $W^{O}_{PIM}(DL_1)$, so that (each column of) each precoding matrix in $W^{O}_{PIM}(DL_1)$ is orthogonal and has a normalized modulus.

(2) For each precoding matrix $w_k(f_1, g_x, g_y, g_z)$ of $DL_1$, perform the same processing, to be specific, a projection in $W^{O}_{PIM}(DL_1)$ is removed, and a new precoding matrix is: $w'_k(f_1, g_x, g_y, g_z) = w_k(f_1, g_x, g_y, g_z) - W^{O}_{PIM}(DL_1)W^{O}_{PIM}(DL_1)^H w_k(f_1, g_x, g_y, g_z)$. H represents conjugate transposition.

Type 2: In S702, when the uplink positioning method in FIG. 5 is used to obtain the first power values of the plurality of scanning spots, the updating the weight set based on the PIM source weight set in S706 includes: after performing orthogonalization processing (for example, Gram-Schmidt orthogonalization processing) on the weight matrix in the PIM source weight set, removing a projection of each weight matrix in the weight set in the PIM source weight set. Details are as follows:

1. Perform Gram-Schmidt orthogonalization processing is performed on (each column of) the weight matrix in $W_{PIM}$ (UL), and denote as $W_{PIM}^{O}(UL)$, so that (each column of) each weight matrix in $W_{PIM}^{O}(UL)$ is orthogonal and has a normalized modulus.

2. Remove a projection of each weight matrix $w_k(f_{UL}, g_x, g_y, g_z)$ in the weight set in $W_{PIM}^{O}(UL)$, and a new weight matrix is: $w'_k(f_{UL}, g_x, g_y, g_z) = w_k(f_{UL}, g_x, g_y, g_z) - W_{PIM}^{O}(UL)W_{PIM}^{O}(UL)^H w_k(f_{UL}, g_x, g_y, g_z)$. H represents conjugate transposition.

Type 3: In S702, when the uplink + downlink positioning method in FIG. 6 is used to obtain the first power values of the plurality of scanning spots, the updating the precoding set based on the PIM source precoding set and updating the weight set based on the PIM source weight set in S706 includes: after performing orthogonalization processing (for example, Gram-Schmidt orthogonalization processing) on the precoding matrix in the PIM source precoding set, removing a projection of each precoding matrix in the precoding set in the PIM source precoding set; and after performing orthogonalization processing (for example, Gram-Schmidt orthogonalization processing) on the weight matrix in the PIM source weight set, removing a projection of each weight matrix in the weight set in the PIM source weight set. Specifically, Gram-Schmidt orthogonalization is respectively performed on $W_{PIM}(DL_0)$, $W_{PIM}(DL_1)$, and $W_{PIM}(UL)$ to obtain $W_{PIM}^{O}(DL_0)$, $W_{PIM}^{O}(DL_1)$, and $W_{PIM}^{O}(UL)$, and then new precoding matrices and weight matrices are obtained. For details, refer to the foregoing related descriptions with reference to Type 1 and Type 2. Details are not described herein again.

Therefore, in the PIM source positioning procedure shown in FIG. 7, based on the PIM source positioning method shown in FIG. 4 to FIG. 6, after the plurality of scanning spots in the scanning area are traversed once, a precoding matrix of a target scanning spot that is most likely to be a PIM source in the plurality of scanning spots is used as obtained downlink interference channel information, and/or a weight matrix of a target scanning spot that is most likely to be a PIM source in the plurality of scanning spots is used as obtained uplink interference channel information, and the precoding set and/or the weight set are/is updated based on the obtained downlink interference channel information and/or uplink interference channel information, to effectively suppress a PIM signal of the PIM source in a next traversal of the plurality of scanning spots. In this way, according to the method procedure shown in FIG. 7, by using a method of positioning all possible PIM sources in the scanning area and suppressing the PIM sources one by one, accuracy of positioning the PIM source is further improved.

Refer to FIG. 8. The PIM source positioning method performed by the network device includes the following steps.

S801: Obtain a precoding set and/or a weight set for the plurality of scanning spots in the scanning area, and perform a corresponding scanning process on a first scanning spot in the plurality of scanning spots based on the obtained precoding set and/or weight set, to obtain an uplink PIM signal (or a first signal obtained through processing) and a first power value that are corresponding to the first scanning spot. Specifically, scanning is performed on the first scanning spot according to any method in FIG. 4 to FIG. 6, to obtain the uplink PIM signal (or the first signal obtained through processing) and the first power value corresponding to the first scanning spot. Specifically, refer to the foregoing related descriptions. Details are not described herein again.

S802: Determine, based on first power values respectively corresponding to a plurality of currently scanned first scanning spots, whether a PIM source exists in a scanned area. The step is specifically: determining, based on the plurality of currently scanned first scanning spots, whether a target scanning spot that meets a first condition exists. If the target scanning spot exists, proceed to S803. If the target scanning spot does not exist, return to S801 to continue scanning another scanning spot. For a specific determining manner, refer to the foregoing related descriptions with reference to FIG. 4 to FIG .6. Details are not described herein again.

S803: Record location information of the target scanning spot as $\bar{x}_{PIM}$ and record the position information in a PIM source location set $X_{PIM}$, record a precoding matrix of the target scanning spot as $w_{PIM}$ and record the precoding matrix in a PIM source precoding set $W_{PIM}$, and/or record a weight matrix of the target scanning spot as $w_{PIM}$ and record the weight matrix in a PIM source weight set $W_{PIM}$. The detailed step is determined based on the method used in S702.

S804: Determine whether all scanning spots are traversed. If all scanning spots are not traversed, proceed to S805. If all scanning spots are traversed, proceed to S806. Herein, because there may be different implementations in S801, for meanings of traversing all scanning spots in S804, refer to the foregoing related descriptions based on any method in FIG. 4 to FIG. 6 used in S801. Details are not described herein again.

S805: Update a precoding set based on the PIM source precoding set, and/or update a weight set based on the PIM source weight set. Then, based on the updated precoding set and/or the updated weight set, S801 to S804 are performed again until all scanning spots are traversed. Because there may be different implementation processes in S801, update may be correspondingly performed in S805 for different cases. Specifically, refer to the foregoing related descriptions with reference to S706. Details are not described herein again.

S806: Output the PIM source location set. The PIM source location set includes location information of all PIM sources in the scanning area.

Therefore, in the PIM source positioning procedure shown in FIG. 8, based on the PIM source positioning method shown in FIG. 4 to FIG. 6, after a corresponding scanning step is performed on one first scanning spot in the plurality of scanning spots each time (a quantity of scanning times is determined based on a quantity of corresponding precoding matrices and/or data of weight matrices, and for details, refer to the foregoing related descriptions, which are not described herein again), a PIM source is determined in a plurality of scanned first scanning spots in a current scanned area. If the PIM source does not exist, scanning is continued; if the PIM source exists, a precoding matrix of a second scanning spot determined as the PIM source is used as the obtained downlink interference channel information, and/or a weight matrix of a second scanning spot determined as the PIM source is used as the obtained uplink interference channel information, and the precoding set and/or the weight set are/is updated based on the obtained downlink interference channel information and/or uplink interference channel information, to suppress a PIM signal of the PIM source in scanning for a next scanning spot. In this way, according to the method procedure shown in FIG. 8, by using a method of positioning PIM sources in the scanning area and suppressing the PIM sources one by one, accuracy of positioning the PIM source is further improved.

According to the PIM source positioning method in FIG. 7 and FIG. 8, there is no need to rely on an external device, and based on existing wireless communication system hardware, algorithm-related calculation is performed by using a BBU, a scanning spot is associated with a downlink signal sent by a network device and/or an uplink signal received by the network device, and analysis and determining are performed on the uplink signal, to implement PIM source positioning and suppress (or eliminate) all PIM sources. This solution is easy to operate, costs of using an external device can be saved, and an application scope is no longer limited by a working mechanism of the external device. In addition, an antenna near which the PIM source is specifically located can be positioned, and positioning accuracy is high.

According to the PIM source positioning solution, there is no need to rely on an external device, and based on existing wireless communication system hardware, algorithm-related calculation is performed by using a BBU, a scanning spot is associated with a downlink signal sent by a network device by using a transmit antenna and/or an uplink PIM signal received by the network device, and analysis and determining are performed on the uplink PIM signal after scanning and interference suppressing, to implement PIM source positioning. This solution is easy to implement, and an application scope is no longer limited by a working mechanism of the external device. In addition, because no external device is needed, costs of using the external device can be saved. In addition, by using this solution, an antenna near which the PIM source is specifically located can be positioned, and positioning accuracy is high.

The foregoing mainly describes the solutions provided in this application from a perspective of the network device. It may be understood that, to implement the foregoing functions, the network device includes corresponding hardware structures and/or software modules for performing the functions. A person skilled in the art should be easily aware that units and algorithm steps in the examples described with reference to the embodiments disclosed in this specification can be implemented in a form of hardware or a combination of hardware and computer software in the present invention. Whether a function is executed by hardware or hardware driven by computer software depends on particular applications and design constraints of the technical solutions. A person skilled in the art may use different methods to implement the described functions of each particular application, but it should not be considered that the implementation goes beyond the scope of the present invention.

An embodiment of this application further provides a PIM source positioning apparatus. FIG. 9 is a schematic diagram of a structure of a PIM source positioning apparatus 900 according to an embodiment of this application. The apparatus 900 includes a transceiver unit 910 and a processing unit 920. The apparatus may be configured to implement a function of the network device in any one of the foregoing method embodiments. For example, the apparatus may be a network device or a chip included in a network device.

When the apparatus functions as a network device to perform the method embodiments in FIG. 3 to FIG. 8, the transceiver unit 910 is configured to: sequentially perform a scanning process on each of a plurality of scanning spots by using the following steps: sending a plurality of downlink signals with different frequencies for a first scanning spot by using a transmit antenna, and receiving an uplink PIM signal for the first scanning spot by using a receive antenna, where the first scanning spot is any one of the plurality of scanning spots, and the uplink PIM signal is generated by excitation by any at least two of the plurality of downlink signals; and the processing unit 920 is configured to determine a PIM source from the plurality of scanning spots based on uplink PIM signals respectively corresponding to the plurality of scanning spots.

In a possible design, the processing unit 920 is specifically configured to: before the transceiver unit sends the plurality of downlink signals for the first scanning spot by using the transmit antenna, perform precoding processing on at least one of the plurality of downlink signals based on at least one precoding matrix of the first scanning spot, where the precoding matrix of the first scanning spot includes any one of the following: a complex conjugate matrix of a first electric field matrix of the first scanning spot, and/or a normalized matrix of the complex conjugate matrix of the first electric field matrix of the first scanning spot; a complex conjugate matrix of at least one spatial component of the first electric field matrix of the first scanning spot, and/or a normalized matrix of the complex conjugate matrix of the at least one spatial component of the first electric field matrix of the first scanning spot; and a complex conjugate matrix of at least one eigenvector obtained through singular value decomposition SVD by the first electric field matrix of the first scanning spot, where the first electric field matrix of the first scanning spot is obtained based on an antenna electromagnetic field model and a downlink configuration parameter.

In a possible design, the processing unit is specifically configured to: determine, by using the following steps, first power values respectively corresponding to the plurality of scanning spots: determining, based on a sum of receive powers of a plurality of receive antennas in each scanning process on the first scanning spot, an uplink PIM signal receive power corresponding to the precoding matrix; and determining, based on the uplink PIM signal receive power obtained in at least one scanning process on the first scanning spot, a first power value corresponding to the first scanning spot; determine, from the plurality of scanning spots, at least one target scanning spot whose first power value meets a first condition; and determine the target scanning spot as the PIM source.

In a possible design, the first power value is: a maximum value of the uplink PIM signal receive power corresponding to the at least one scanning process on the first scanning spot; or an average value of the uplink PIM signal receive power corresponding to the at least one scanning process on the first scanning spot.

In a possible design, the processing unit is specifically configured to: determine, by the network device by using the following steps, first power values respectively corresponding to the plurality of scanning spots: performing, in each scanning process on the first scanning spot based on a weight matrix of the first scanning spot, weighted summation processing on uplink PIM signals received by the plurality of receive antennas, to obtain a first signal, and determining a power of the first signal; and determining, based on the power of the first signal obtained in at least one scanning process on the first scanning spot, a first power value corresponding to the first scanning spot; determine, from the plurality of scanning spots, at least one target scanning spot whose first power value meets a first condition; and determine the target scanning spot as the PIM source.

In a possible design, a weight matrix of the first scanning spot includes any one of the following: a complex conjugate matrix of a second electric field matrix of the first scanning spot, and/or a normalized matrix of the complex conjugate matrix of the second electric field matrix of the first scanning spot; a complex conjugate matrix of at least one spatial component of the second electric field matrix of the first scanning spot, and/or a normalized matrix of the complex conjugate matrix of the at least one spatial component of the second electric field matrix of the first scanning spot; and a complex conjugate matrix of at least one eigenvector obtained through singular value decomposition SVD by the second electric field matrix of the first scanning spot, where the second electric field matrix of the first scanning spot is obtained based on an antenna electromagnetic field model and an uplink configuration parameter.

In a possible design, the first power value is: a maximum power of the first signal corresponding to the at least one scanning process on the first scanning spot; or an average power of the first signal corresponding to the at least one scanning process on the first scanning spot.

In a possible design, each scanning spot corresponds to one first power value, and the first condition includes: the first power value is a maximum value, and the first power value is greater than or equal to a set first threshold; and/or the first power value belongs to a first area in a power distribution image, where the power distribution image is obtained based on the first power values of the plurality of scanning spots, and the first area is an area whose power value is greater than the first threshold.

In a possible design, the processing unit is configured to: after determining the PIM source from the plurality of scanning spots, perform the following steps for a second scanning spot that is in the plurality of scanning spots and that is determined as the PIM source: recording location information of the second scanning spot into a PIM source location set, and obtaining, based on the second scanning spot, downlink interference channel information from the transmit antenna to the PIM source and/or uplink interference channel information from the PIM source to the receive antenna.

It should be understood that the processing unit 920 in the apparatus may be implemented by a processor or a processor-related circuit component, and the transceiver unit 910 may be implemented by a transceiver or a transceiver-related circuit component. Operations and/or functions of the units in the apparatus are respectively configured to implement corresponding procedures of the methods in FIG. 3 to FIG. 8. For brevity, details are not described herein again.

FIG. 10 is a schematic diagram of another structure of a PIM source positioning apparatus according to an embodiment of this application. The apparatus 1000 may be specifically a network device, such as a base station, and is configured to implement a function of the network device in any one of the foregoing method embodiments.

The network device includes one or more radio frequency units, such as a remote radio unit (remote radio unit, RRU) 1001 and one or more baseband units (baseband units, BBUs) (which may also be referred to as digital units (digital units, DUs)) 1002. The RRU 1001 may be referred to as a transceiver unit, a transceiver machine, a transceiver circuit, a transceiver, or the like, and may include at least one antenna 10011 and a radio frequency unit 10012. The RRU 1001 is mainly configured to: send and receive a radio frequency signal, and perform conversion between a radio frequency signal and a baseband signal. The BBU 1002 is mainly configured to: perform baseband processing, control a base station, and the like. The RRU 1001 and the BBU 1002 may be physically disposed together, or may be physically disposed separately, to be specific, the base station is a distributed base station.

The BBU 1002 is a control center of the base station, may also be referred to as a processing unit, and is mainly configured to complete baseband processing functions such as channel encoding, multiplexing, modulation, and spectrum spreading. For example, the BBU (the processing unit) 1002 may be configured to control the base station to execute an operation procedure of the network device in the foregoing method embodiments.

In an example, the BBU 1002 may include one or more boards, and a plurality of boards may jointly support a radio access network (for example, an LTE network) of a single access standard, or may separately support radio access networks (for example, an LTE network, a 5G network, or another network) of different access standards. The BBU 1002 may further include a memory 10021 and a processor 10022. The memory 10021 is configured to store necessary instructions and data. The processor 10022 is configured to control the base station to perform a necessary action, for example, configured to control the base station to perform a sending operation in the foregoing method embodiments. The memory 10021 and the processor 10022 may serve one or more boards. In other words, a memory and a processor may be separately disposed on each board. Alternatively, a plurality of boards may share a same memory and a same processor. In addition, a necessary circuit may be further disposed on each board.

An embodiment of this application further provides a chip system including a processor. The processor is coupled to a memory. The memory is configured to store a program or instructions. When the program or the instructions are executed by the processor, the chip system is enabled to implement the method in any one of the method embodiments.

Optionally, there may be one or more processors in the chip system. The processor may be implemented by hardware or may be implemented by software. When implemented by hardware, the processor may be a logic circuit, an integrated circuit, or the like. When implemented by software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, such as a read-only memory ROM. The memory and the processor may be integrated into one chip, or may be separately disposed on different chips. A type of the memory and a manner in which the memory and the processor are disposed are not limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

It should be understood that, the steps in the foregoing method embodiments may be completed by using a logic circuit or instructions in a form of software in the processor. The steps of the method disclosed with reference to embodiments of this application may be directly performed by a hardware processor, or may be performed by using a combination of hardware and a software module in the processor.

An embodiment of this application further provides a computer-readable storage medium. The computer storage medium stores computer-readable instructions. When a computer reads and executes the computer-readable instructions, the computer is enabled to perform the method in any one of the method embodiments.

An embodiment of this application further provides a computer program product. When a computer reads and executes the computer program product, the computer is enabled to perform the method in any one of the method embodiments.

An embodiment of this application further provides a communication system. The communication system includes a network device and at least one terminal device.

It should be understood that, the processor mentioned in embodiments of this application may be a CPU, or may be another general-purpose processor, a DSP, an ASIC, an FPGA, or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory, or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, or another programmable logic device, a discrete gate or a transistor logic device, or a discrete hardware component, the memory (storage module) is integrated into the processor.

It should be noted that the memory described in this specification is intended to include, but is not limited to, these memories and any other appropriate types of memories.

It should be understood that various numbers in embodiments of this application are merely used for differentiation for ease of description. Sequence numbers of the foregoing processes do not mean execution sequences. The execution sequences of the processes should be determined based on functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are executed by hardware or software depends on particular applications and design constraints of the technical solutions. A person skilled in the art may use different methods to implement the described functions of each particular application, but it should not be considered that the implementation goes beyond the scope of this application.

It can be clearly understood by a person skilled in the art that, for a purpose of convenient and brief descriptions, for a detailed working process of the foregoing system, apparatus, and unit, refer to a corresponding process in the foregoing method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A passive intermodulation, PIM, source positioning method, wherein the method comprises:

sequentially performing (S310), by a network device, a scanning process on each of a plurality of scanning spots by using the following steps: sending a plurality of downlink signals with different frequencies for a first scanning spot by using a transmit antenna, and receiving an uplink PIM signal for the first scanning spot by using a receive antenna, wherein the first scanning spot is any one of the plurality of scanning spots, and the uplink PIM signal is generated by excitation by any at least two of the plurality of downlink signals, wherein the network device divides a spatial area in which scanning is to be performed to detect a PIM source into I grids, where each grid is represented by one scanning spot, and I is a positive integer, indicating a quantity of scanning spots; and determining (S310), by the network device, the PIM source from the plurality of scanning spots based on uplink PIM signals respectively corresponding to the plurality of scanning spots,
wherein before sending, by the network device, the plurality of downlink signals for the first scanning spot by using the transmit antenna, the method further comprises:

performing, by the network device, precoding processing on at least one of the plurality of downlink signals based on at least one precoding matrix of the first scanning spot, wherein
the precoding matrix of the first scanning spot comprises any one of the following:

a complex conjugate matrix of a first electric field matrix of the first scanning spot, and/or a normalized matrix of the complex conjugate matrix of the first electric field matrix of the first scanning spot;
a complex conjugate matrix of at least one spatial component of the first electric field matrix of the first scanning spot, and/or a normalized matrix of the complex conjugate matrix of the at least one spatial component of the first electric field matrix of the first scanning spot; and
a complex conjugate matrix of at least one eigenvector obtained through singular value decomposition, SVD, by the first electric field matrix of the first scanning spot, wherein
the first electric field matrix of the first scanning spot is obtained based on an antenna electromagnetic field model and a downlink configuration parameter.

**2.** The method according to claim 1, wherein the determining, by the network device, a PIM source from the plurality of scanning spots based on uplink PIM signals respectively corresponding to the plurality of scanning spots comprises:
determining, by the network device by using the following steps, first power values respectively corresponding to the plurality of scanning spots:

determining, based on a sum of receive powers of a plurality of receive antennas in each scanning process on the first scanning spot, an uplink PIM signal receive power corresponding to the at least one precoding matrix; and determining, based on the uplink PIM signal receive power obtained in at least one scanning process on the first scanning spot, a first power value corresponding to the first scanning spot;
determining, by the network device from the plurality of scanning spots, at least one target scanning spot whose first power value meets a first condition; and
determining, by the network device, the target scanning spot as the PIM source.

**3.** The method according to claim 2, wherein the first power value is:

a maximum value of the uplink PIM signal receive power corresponding to the at least one scanning process on the first scanning spot; or
an average value of the uplink PIM signal receive power corresponding to the at least one scanning process on the first scanning spot.

**4.** The method according to claim 1, wherein there are a plurality of receive antennas, and the determining, by the network device, a PIM source from the plurality of scanning spots based on uplink PIM signals respectively corresponding to the plurality of scanning spots comprises:
determining, by the network device by using the following steps, first power values respectively corresponding to the plurality of scanning spots:

performing, in each scanning process on the first scanning spot based on a weight matrix of the first scanning spot, weighted summation processing on uplink PIM signals received by the plurality of receive antennas, to obtain a first signal, and determining a power of the first signal; and determining, based on the power of the first signal obtained in at least one scanning process on the first scanning spot, a first power value corresponding to the first scanning spot;
determining, by the network device from the plurality of scanning spots, at least one target scanning spot whose first power value meets a first condition; and
determining, by the network device, the target scanning spot as the PIM source.

**5.** The method according to claim 4, wherein a weight matrix of the first scanning spot comprises any one of the following:

a complex conjugate matrix of a second electric field matrix of the first scanning spot, and/or a normalized matrix of the complex conjugate matrix of the second electric field matrix of the first scanning spot;
a complex conjugate matrix of at least one spatial component of the second electric field matrix of the first scanning spot, and/or a normalized matrix of the complex conjugate matrix of the at least one spatial component of the second electric field matrix of the first scanning spot; and
a complex conjugate matrix of at least one eigenvector obtained through singular value decomposition, SVD, by the second electric field matrix of the first scanning spot, wherein
the second electric field matrix of the first scanning spot is obtained based on an antenna electromagnetic field model and an uplink configuration parameter.

**6.** The method according to claim 4 or 5, wherein the first power value is:

a maximum power of the first signal corresponding to the at least one scanning process on the first scanning spot; or
an average power of the first signal corresponding to the at least one scanning process on the first scanning spot.

**7.** The method according to any one of claims 2 to 6, wherein each scanning spot corresponds to one first power value, and the first condition comprises:

the first power value is a maximum value, and the first power value is greater than or equal to a set first threshold; and/or
the first power value belongs to a first area in a power distribution image, wherein the power distribution image is obtained based on the first power values of the plurality of scanning spots, and the first area is an area whose power value is greater than the first threshold.

**8.** The method according to any one of claims 1 to 7, wherein after the determining, by the network device, a PIM source from the plurality of scanning spots, the method further comprises:
performing, by the network device, the following steps for a second scanning spot that is in the plurality of scanning spots and that is determined as the PIM source:
recording location information of the second scanning spot into a PIM source location set, and obtaining, based on the second scanning spot, downlink interference channel information from the transmit antenna to the PIM source and/or uplink interference channel information from the PIM source to the receive antenna.

**9.** An apparatus, wherein the apparatus is configured to perform the method according to any one of claims 1 to 8.

**10.** A computer readable storage medium comprising an instruction, wherein which, when executed by a computer device, cause the computer device to perform the method according to any one of claims 1 to 8.

**11.** A computer program product, comprising an instruction, wherein which, when executed by a computer device, cause the computer device to perform the method according to any one of claims 1 to 8.

**12.** A chip system including a processor coupled to a memory and the memory configured to store a program or instructions, wherein the program or the instructions, which, when being executed by the processor, enable the chip system to implement the method according to any one of claims 1 to 8.

**Patentansprüche**

**1.** Verfahren zur Positionierung einer Quelle passiver Intermodulation, PIM-Quelle, wobei das Verfahren Folgendes umfasst:

sequentielles Durchführen (S310), durch eine Netzeinrichtung, eines Abtastungsprozesses an jedem einer Vielzahl von Abtastungspunkten unter Verwendung der folgenden Schritte:

Senden einer Vielzahl von Downlink-Signalen mit unterschiedlichen Frequenzen für einen ersten Abtastungspunkt unter Verwendung einer Übertragungsantenne und Empfangen eines Uplink-PIM-Signals für den ersten Abtastungspunkt unter Verwendung einer Empfangsantenne, wobei der erste Abtastungspunkt einer der Vielzahl von Abtastungspunkten ist und
das Uplink-PIM-Signal durch Anregung durch mindestens zwei beliebige der Vielzahl von Downlink-Signalen erzeugt wird, wobei die Netzeinrichtung einen räumlichen Bereich, in dem eine Abtastung durchzuführen ist, um eine PIM-Quelle zu detektieren, in I Raster teilt, wobei jedes Raster durch einen Abtastungspunkt dargestellt wird und I eine positive Ganzzahl ist, die eine Anzahl an Abtastungspunkten angibt; und
Bestimmen (S310), durch die Netzeinrichtung, der PIM-Quelle aus der Vielzahl von Abtastungspunkten basierend auf Uplink-PIM-Signalen, die jeweils der Vielzahl von Abtastungspunkten entsprechen,
wobei das Verfahren vor dem Senden, durch die Netzeinrichtung, der Vielzahl von Downlink-Signalen für den ersten Abtastungspunkt unter Verwendung der Übertragungsantenne ferner Folgendes umfasst:

Durchführen, durch die Netzeinrichtung, einer Vorcodierungsverarbeitung an mindestens einem der Vielzahl von Downlink-Signalen basierend auf mindestens einer Vorcodierungsmatrix des ersten Abtastungspunkts, wobei die Vorcodierungsmatrix des ersten Abtastungspunkts eine der Folgenden umfasst:

einer Matrix komplexer Konjugation einer ersten elektrischen Feldmatrix des ersten Abtastungspunkts und/oder einer normierten Matrix der Matrix komplexer Konjugation der ersten elektrischen Feldmatrix des ersten Abtastungspunkts;
einer Matrix komplexer Konjugation mindestens einer räumlichen Komponente der ersten elektrischen Feldmatrix des ersten Abtastungspunkts und/oder einer normierten Matrix der Matrix komplexer Konjugation der mindestens einen räumlichen Komponente der ersten elektrischen Feldmatrix des ersten Abtastungspunkts; und
einer Matrix komplexer Konjugation mindestens eines Eigenvektors, der durch Singulärwertzerlegung, SVD, durch die erste elektrische Feldmatrix des ersten Abtastungspunkts erlangt wird, wobei die erste elektrische Feldmatrix des ersten Abtastungspunkts basierend auf einem elektromagnetischen Antennenfeldmodell und einem Downlink-Konfigurationsparameter erlangt wird.

**2.** Verfahren nach Anspruch 1, wobei das Bestimmen, durch die Netzeinrichtung, einer PIM-Quelle aus der Vielzahl von Abtastungspunkten basierend auf Uplink-PIM-Signalen, die jeweils der Vielzahl von Abtastungspunkten entsprechen, Folgendes umfasst:
Bestimmen, durch die Netzeinrichtung unter Verwendung der folgenden Schritte, erster Leistungswerte, die jeweils der Vielzahl von Abtastungspunkten entsprechen:

Bestimmen, basierend auf einer Summe von Empfangsleistungen einer Vielzahl von Empfangsantennen in jedem Abtastungsprozess auf dem ersten Abtastungspunkt, einer Uplink-PIM-Signalempfangsleistung, die der mindestens einen Vorcodierungsmatrix entspricht; und Bestimmen, basierend auf der Uplink-PIM-Signalempfangsleistung, die in mindestens einem Abtastungsprozess auf dem ersten Abtastungspunkt erlangt wird, eines ersten Leistungswerts, der dem ersten Abtastungspunkt entspricht;
Bestimmen, durch die Netzeinrichtung aus der Vielzahl von Abtastungspunkten, mindestens eines Zielabtastungspunkts, dessen erster Leistungswert eine erste Bedingung erfüllt; und
Bestimmen, durch die Netzeinrichtung, des Zielabtastungspunkts als die PIM-Quelle.

**3.** Verfahren nach Anspruch 2, wobei der erste Leistungswert Folgendes ist:

ein Maximalwert der Uplink-PIM-Signalempfangsleistung, die dem mindestens einen Abtastungsprozess auf dem ersten Abtastungspunkt entspricht; oder
ein Durchschnittswert der Uplink-PIM-Signalempfangsleistung, die dem mindestens einen Abtastungsprozess auf dem ersten Abtastungspunkt entspricht.

**4.** Verfahren nach Anspruch 1, wobei es eine Vielzahl von Empfangsantennen gibt und das Bestimmen, durch die Netzeinrichtung, einer PIM-Quelle aus der Vielzahl von Abtastungspunkten basierend auf Uplink-PIM-Signalen, die jeweils der Vielzahl von Abtastungspunkten entsprechen, Folgendes umfasst:
Bestimmen, durch die Netzeinrichtung unter Verwendung der folgenden Schritte, erster Leistungswerte, die jeweils der Vielzahl von Abtastungspunkten entsprechen:

Durchführen, in jedem Abtastungsprozess auf dem ersten Abtastungspunkt basierend auf einer Gewichtsmatrix des ersten Abtastungspunkts, einer gewichteten Summierungsverarbeitung an Uplink-PIM-Signalen, die durch die Vielzahl von Empfangsantennen empfangen werden, um ein erstes Signal zu erlangen, und Bestimmen einer Leistung des ersten Signals; und Bestimmen, basierend auf der Leistung des ersten Signals, das in mindestens einem Abtastungsprozess auf dem ersten Abtastungspunkt erlangt wird, eines ersten Leistungswerts, der dem ersten Abtastungspunkt entspricht;
Bestimmen, durch die Netzeinrichtung aus der Vielzahl von Abtastungspunkten, mindestens eines Zielabtastungspunkts, dessen erster Leistungswert eine erste Bedingung erfüllt; und
Bestimmen, durch die Netzeinrichtung, des Zielabtastungspunkts als die PIM-Quelle.

**5.** Verfahren nach Anspruch 4, wobei eine Gewichtsmatrix des ersten Abtastungspunkts eine der Folgenden umfasst:

einer Matrix komplexer Konjugation einer zweiten elektrischen Feldmatrix des ersten Abtastungspunkts und/oder einer normierten Matrix der Matrix komplexer Konjugation der zweiten elektrischen Feldmatrix des ersten Abtastungspunkts;
einer Matrix komplexer Konjugation mindestens einer räumlichen Komponente der zweiten elektrischen Feldmatrix des ersten Abtastungspunkts und/oder einer normierten Matrix der Matrix komplexer Konjugation der mindestens einen räumlichen Komponente der zweiten elektrischen Feldmatrix des ersten Abtastungspunkts; und
einer Matrix komplexer Konjugation mindestens eines Eigenvektors, der durch Singulärwertzerlegung, SVD, durch die zweite elektrische Feldmatrix des ersten Abtastungspunkts erlangt wird, wobei
die zweite elektrische Feldmatrix des ersten Abtastungspunkts basierend auf einem elektromagnetischen Antennenfeldmodell und einem Uplink-Konfigurationsparameter erlangt wird.

**6.** Verfahren nach Anspruch 4 oder 5, wobei der erste Leistungswert Folgendes ist:

eine Maximalleistung des ersten Signals, das dem mindestens einen Abtastungsprozess auf dem ersten Abtastungspunkt entspricht; oder
eine Durchschnittsleistung des ersten Signals, das dem mindestens einen Abtastungsprozess auf dem ersten Abtastungspunkt entspricht.

**7.** Verfahren nach einem der Ansprüche 2 bis 6, wobei jeder Abtastungspunkt einem ersten Leistungswert entspricht und die erste Bedingung Folgendes umfasst:

der erste Leistungswert ist ein Maximalwert und der erste Leistungswert ist größer als oder gleich einem eingestellten ersten Schwellenwert; und/oder
der erste Leistungswert gehört zu einem ersten Bereich in einem Leistungsverteilungsbild, wobei das Leistungsverteilungsbild basierend auf den ersten Leistungswerten der Vielzahl von Abtastungspunkten erlangt wird und der erste Bereich ein Bereich ist, dessen Leistungswert größer als der erste Schwellenwert ist.

**8.** Verfahren nach einem der Ansprüche 1 bis 7, wobei das Verfahren nach dem Bestimmen, durch die Netzeinrichtung, einer PIM-Quelle aus der Vielzahl von Abtastungspunkten ferner Folgendes umfasst:
Durchführen, durch die Netzeinrichtung, der folgenden Schritte für einen zweiten Abtastungspunkt, der sich in der Vielzahl von Abtastungspunkten befindet und der als die PIM-Quelle bestimmt wird:
Aufzeichnen von Positionsinformationen des zweiten Abtastungspunkts in einem PIM-Quellenpositionssatz und Erlangen, basierend auf dem zweiten Abtastungspunkt, von Downlink-Interferenzkanalinformationen von der Übertragungsantenne zu der PIM-Quelle und/oder Uplink-Interferenzkanalinformationen von der PIM-Quelle zu der Empfangsantenne.

**9.** Vorrichtung, wobei die Vorrichtung dazu konfiguriert ist, das Verfahren nach einem der Ansprüche 1 bis 8 durchzuführen.

**10.** Computerlesbares Speichermedium, umfassend eine Anweisung, wobei diese, wenn sie durch eine Computereinrichtung ausgeführt wird, die Computereinrichtung dazu veranlasst, das Verfahren nach einem der Ansprüche 1 bis 8 durchzuführen.

**11.** Computerprogrammprodukt, umfassend eine Anweisung, wobei diese, wenn sie durch eine Computereinrichtung ausgeführt wird, die Computereinrichtung dazu veranlasst, das Verfahren nach einem der Ansprüche 1 bis 8 durchzuführen.

**12.** Chipsystem, beinhaltend einen Prozessor, der mit einem Speicher gekoppelt ist, und den Speicher, der dazu konfiguriert ist, ein Programm oder Anweisungen zu speichern, wobei das Programm oder die Anweisungen, wenn sie durch den Prozessor ausgeführt werden, es dem Chipsystem ermöglichen, das Verfahren nach einem der Ansprüche 1 bis 8 umzusetzen.

**Revendications**

**1.** Procédé de positionnement de source d'intermodulation passive, PIM, dans lequel le procédé comprend :

la réalisation séquentielle (S310), par un dispositif réseau, d'un processus de balayage sur chacun d'une pluralité de points de balayage à l'aide des étapes suivantes : l'envoi d'une pluralité de signaux de liaison descendante de fréquences différentes pour un premier point de balayage à l'aide d'une antenne de transmission, et la réception d'un signal PIM de liaison montante pour le premier point de balayage à l'aide d'une antenne de réception, dans lequel le premier point de balayage est l'un quelconque de la pluralité de points de balayage, et le signal PIM de liaison montante est généré par une excitation réalisée par au moins deux signaux de la pluralité de signaux de liaison descendante, dans lequel le dispositif réseau divise une zone spatiale dans laquelle le balayage doit être réalisé pour détecter une source PIM en I grilles, où chaque grille est représentée par un point de balayage, et I est un entier positif indiquant une quantité de points de balayage ; et
la détermination (S310), par le dispositif réseau, de la source PIM à partir de la pluralité de points de balayage sur la base de signaux PIM de liaison montante correspondant respectivement à la pluralité de points de balayage, dans lequel, avant l'envoi, par le dispositif réseau, de la pluralité de signaux de liaison descendante pour le premier point de balayage à l'aide de l'antenne de transmission, le procédé comprend également :

la réalisation, par le dispositif réseau, d'un traitement de précodage sur au moins l'un de la pluralité de signaux de liaison descendante, sur la base au moins d'une matrice de précodage du premier point de balayage, dans lequel
la matrice de précodage du premier point de balayage comprend l'un quelconque des éléments suivants :

une matrice conjuguée complexe d'une première matrice de champ électrique du premier point de balayage, et/ou une matrice normalisée de la matrice conjuguée complexe de la première matrice de champ électrique du premier point de balayage ;
une matrice conjuguée complexe d'au moins une composante spatiale de la première matrice de champ électrique du premier point de balayage, et/ou une matrice normalisée de la matrice conjuguée complexe de l'au moins une composante spatiale de la première matrice de champ électrique du premier point de balayage ; et
une matrice conjuguée complexe d'au moins un vecteur propre obtenu par décomposition en valeurs singulières, SVD, de la première matrice de champ électrique du premier point de balayage, dans lequel la première matrice de champ électrique du premier point de balayage est obtenue sur la base d'un modèle de champ électromagnétique d'antenne et d'un paramètre de configuration de liaison descendante.

**2.** Procédé selon la revendication 1, dans lequel la détermination, par le dispositif réseau, d'une source PIM à partir de la pluralité de points de balayage sur la base de signaux PIM de liaison montante correspondant respectivement à la pluralité de points de balayage, comprend :
la détermination, par le dispositif réseau à l'aide des étapes suivantes, de premières valeurs de puissance correspondant respectivement à la pluralité de points de balayage :

la détermination, sur la base d'une somme de puissances de réception d'une pluralité d'antennes de réception lors de chaque processus de balayage sur le premier point de balayage, d'une puissance de réception de signal PIM de liaison montante correspondant à l'au moins une matrice de précodage ; et la détermination, sur la base de la puissance de réception de signal PIM de liaison montante obtenue dans au moins un processus de balayage sur le premier point de balayage, d'une première valeur de puissance correspondant au premier point de balayage ;
la détermination, par le dispositif réseau à partir de la pluralité de points de balayage, d'au moins un point de balayage cible dont la première valeur de puissance satisfait à une première condition ; et
la détermination, par le dispositif réseau, du point de balayage cible comme étant la source PIM.

**3.** Procédé selon la revendication 2, dans lequel la première valeur de puissance est :

une valeur maximale de la puissance de réception de signal PIM de liaison montante correspondant à l'au moins un processus de balayage sur le premier point de balayage ; ou
une valeur moyenne de la puissance de réception de signal PIM de liaison montante correspondant à l'au moins un processus de balayage sur le premier point de balayage.

**4.** Procédé selon la revendication 1, dans lequel il existe une pluralité d'antennes de réception, et la détermination, par le dispositif réseau, d'une source PIM à partir de la pluralité de points de balayage sur la base de signaux PIM de liaison montante correspondant respectivement à la pluralité de points de balayage, comprend :
la détermination, par le dispositif réseau à l'aide des étapes suivantes, de premières valeurs de puissance correspondant respectivement à la pluralité de points de balayage :

la réalisation, lors de chaque processus de balayage sur le premier point de balayage sur la base d'une matrice de pondération du premier point de balayage, d'un traitement de sommation pondérée sur les signaux PIM de liaison montante reçus par la pluralité d'antennes de réception, pour obtenir un premier signal, et la détermination d'une puissance du premier signal ; et la détermination, sur la base de la puissance du premier signal obtenu dans au moins un processus de balayage sur le premier point de balayage, d'une première valeur de puissance correspondant au premier point de balayage ;
la détermination, par le dispositif réseau à partir de la pluralité de points de balayage, d'au moins un point de balayage cible dont la première valeur de puissance satisfait à une première condition ; et
la détermination, par le dispositif réseau, du point de balayage cible comme étant la source PIM.

**5.** Procédé selon la revendication 4, dans lequel une matrice de pondération du premier point de balayage comprend l'un quelconque des éléments suivants :

une matrice conjuguée complexe d'une seconde matrice de champ électrique du premier point de balayage, et/ou une matrice normalisée de la matrice conjuguée complexe de la seconde matrice de champ électrique du premier point de balayage ;
une matrice conjuguée complexe d'au moins une composante spatiale de la seconde matrice de champ électrique du premier point de balayage, et/ou une matrice normalisée de la matrice conjuguée complexe de l'au moins une composante spatiale de la seconde matrice de champ électrique du premier point de balayage ; et
une matrice conjuguée complexe d'au moins un vecteur propre obtenu par décomposition en valeurs singulières, SVD, de la seconde matrice de champ électrique du premier point de balayage, dans lequel
la seconde matrice de champ électrique du premier point de balayage est obtenue sur la base d'un modèle de champ électromagnétique d'antenne et d'un paramètre de configuration de liaison montante.

**6.** Procédé selon la revendication 4 ou 5, dans lequel la première valeur de puissance est :

une puissance maximale du premier signal correspondant à l'au moins un processus de balayage sur le premier point de balayage ; ou
une puissance moyenne du premier signal correspondant à l'au moins un processus de balayage sur le premier point de balayage.

**7.** Procédé selon l'une quelconque des revendications 2 à 6, dans lequel chaque point de balayage correspond à une première valeur de puissance, et la première condition comprend :

la première valeur de puissance est une valeur maximale, et la première valeur de puissance est supérieure ou égale à un premier seuil défini ; et/ou
la première valeur de puissance appartient à une première zone dans une image de distribution de puissance, dans lequel l'image de distribution de puissance est obtenue sur la base des premières valeurs de puissance de la pluralité de points de balayage, et la première zone est une zone dont la valeur de puissance est supérieure au premier seuil.

**8.** Procédé selon l'une quelconque des revendications 1 à 7, dans lequel, après la détermination, par le dispositif réseau, d'une source PIM à partir de la pluralité de points de balayage, le procédé comprend également :
la réalisation, par le dispositif réseau, des étapes suivantes pour un second point de balayage qui se trouve dans la pluralité de points de balayage et qui est déterminé comme étant la source PIM :

l'enregistrement d'informations d'emplacement du second point de balayage dans un ensemble d'emplacements de source PIM et
l'obtention, sur la base du second point de balayage, d'informations de canal d'interférence de liaison descendante de l'antenne d'émission à la source PIM et/ou d'informations de canal d'interférence de liaison montante de la source PIM à l'antenne de réception.

**9.** Appareil, dans lequel l'appareil est configuré pour réaliser le procédé selon l'une quelconque des revendications 1 à 8.

**10.** Support de stockage lisible par ordinateur comprenant une instruction, dans lequel cette instruction, lorsqu'elle est exécutée par un dispositif informatique, amène le dispositif informatique à réaliser le procédé selon l'une quelconque des revendications 1 à 8.

**11.** Produit de programme informatique, comprenant une instruction, dans lequel cette instruction, lorsqu'elle est exécutée par un dispositif informatique, amène le dispositif informatique à réaliser le procédé selon l'une quelconque des revendications 1 à 8.

**12.** Système de puce comportant un processeur couplé à une mémoire et la mémoire étant configurée pour stocker un programme ou des instructions, dans lequel le programme ou les instructions, lorsqu'ils sont exécutés par le processeur, activent le système de puce pour mettre en œuvre le procédé selon l'une quelconque des revendications 1 à 8.

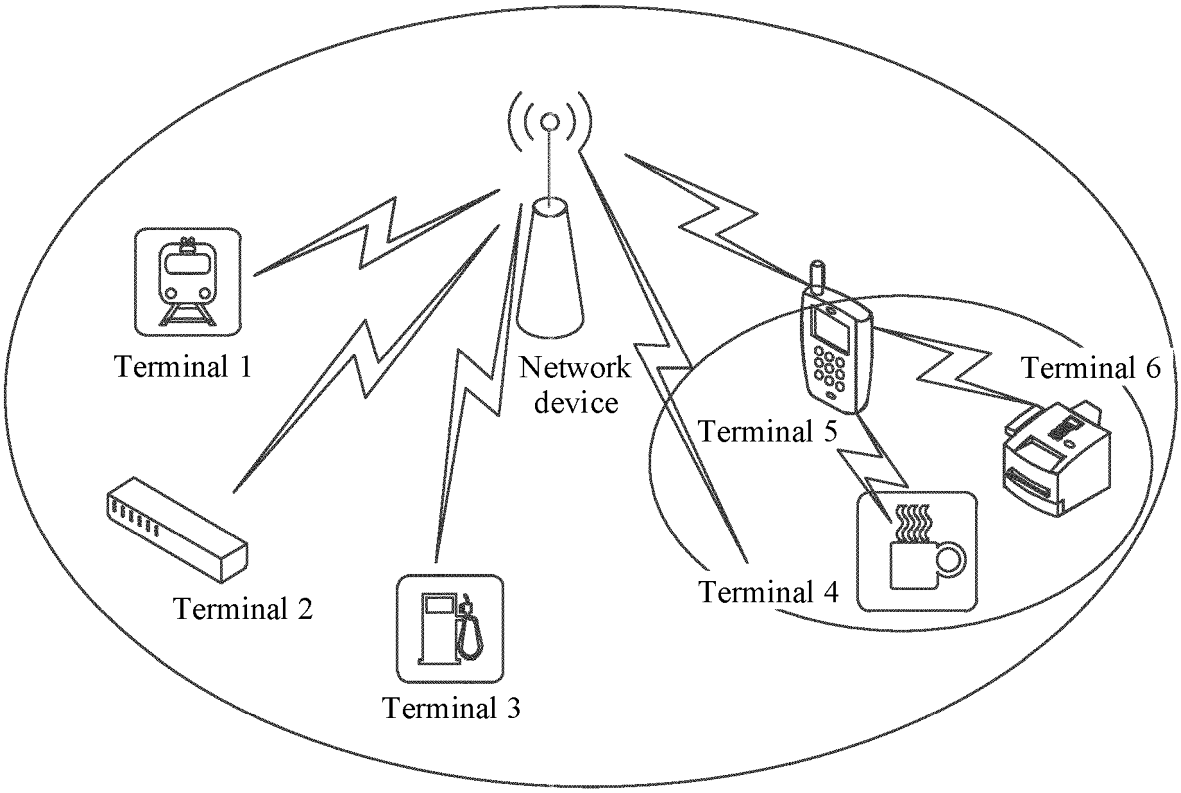


FIG. 1

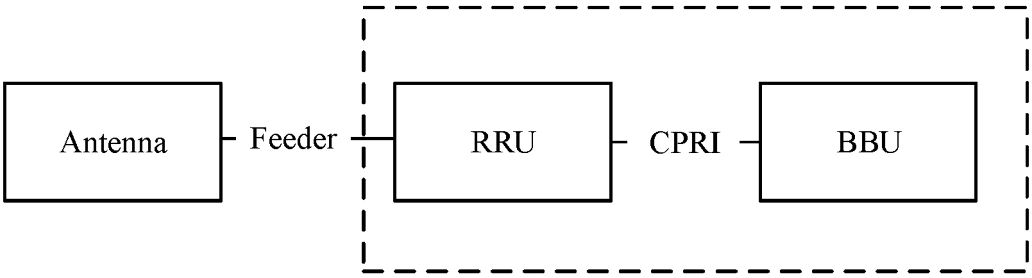


FIG. 2A

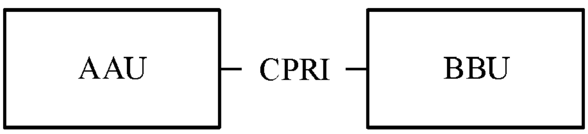


FIG. 2B

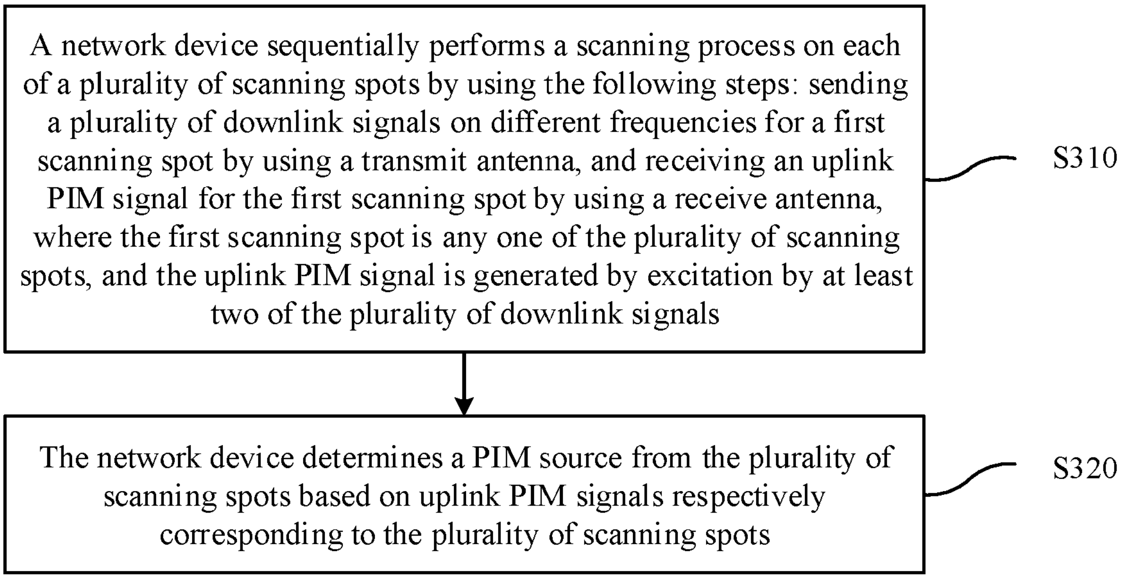
A network device sequentially performs a scanning process on each of a plurality of scanning spots by using the following steps: sending a plurality of downlink signals on different frequencies for a first scanning spot by using a transmit antenna, and receiving an uplink PIM signal for the first scanning spot by using a receive antenna, where the first scanning spot is any one of the plurality of scanning spots, and the uplink PIM signal is generated by excitation by at least two of the plurality of downlink signals
S310
The network device determines a PIM source from the plurality of scanning spots based on uplink PIM signals respectively corresponding to the plurality of scanning spots
S320

FIG. 3

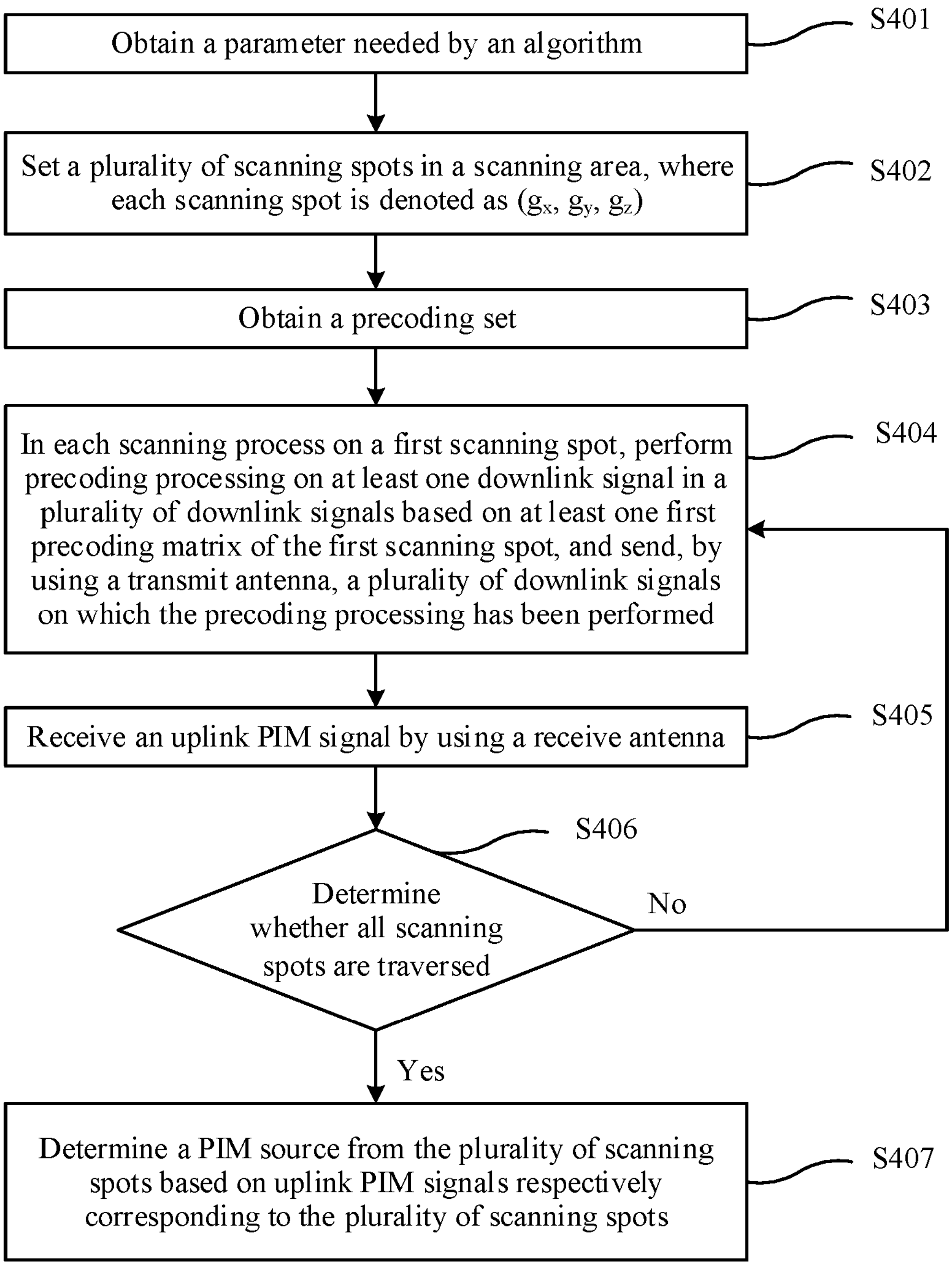
Obtain a parameter needed by an algorithm
S401
Set a plurality of scanning spots in a scanning area, where each scanning spot is denoted as ($g_x$, $g_y$, $g_z$)
S402
Obtain a precoding set
S403
In each scanning process on a first scanning spot, perform precoding processing on at least one downlink signal in a plurality of downlink signals based on at least one first precoding matrix of the first scanning spot, and send, by using a transmit antenna, a plurality of downlink signals on which the precoding processing has been performed
S404
Receive an uplink PIM signal by using a receive antenna
S405
S406
Determine whether all scanning spots are traversed
No
Yes
Determine a PIM source from the plurality of scanning spots based on uplink PIM signals respectively corresponding to the plurality of scanning spots
S407

FIG. 4

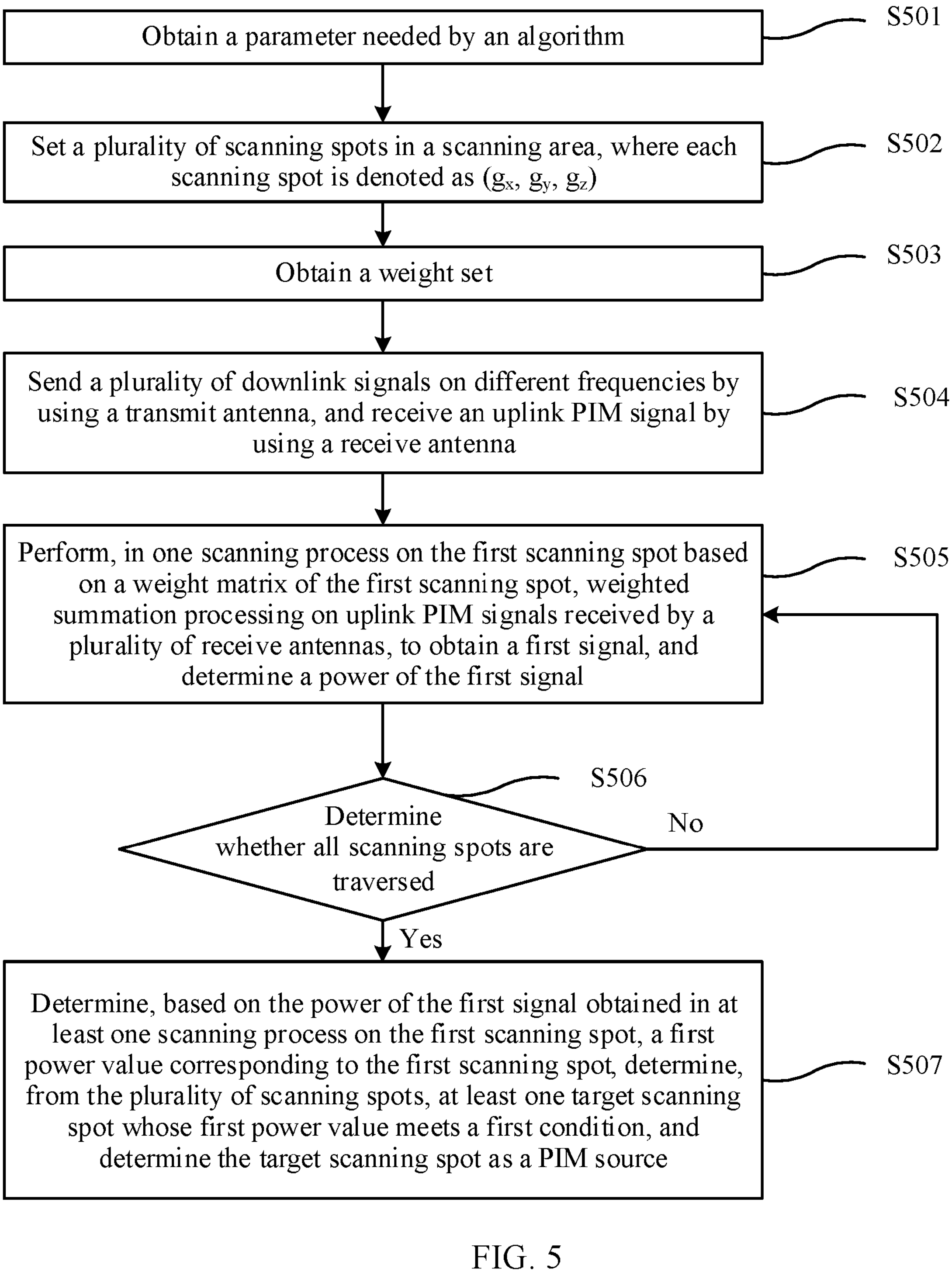
Obtain a parameter needed by an algorithm
S501
Set a plurality of scanning spots in a scanning area, where each scanning spot is denoted as ($g_x$, $g_y$, $g_z$)
S502
Obtain a weight set
S503
Send a plurality of downlink signals on different frequencies by using a transmit antenna, and receive an uplink PIM signal by using a receive antenna
S504
Perform, in one scanning process on the first scanning spot based on a weight matrix of the first scanning spot, weighted summation processing on uplink PIM signals received by a plurality of receive antennas, to obtain a first signal, and determine a power of the first signal
S505
Determine whether all scanning spots are traversed
S506
No
Yes
Determine, based on the power of the first signal obtained in at least one scanning process on the first scanning spot, a first power value corresponding to the first scanning spot, determine, from the plurality of scanning spots, at least one target scanning spot whose first power value meets a first condition, and determine the target scanning spot as a PIM source
S507

FIG. 5

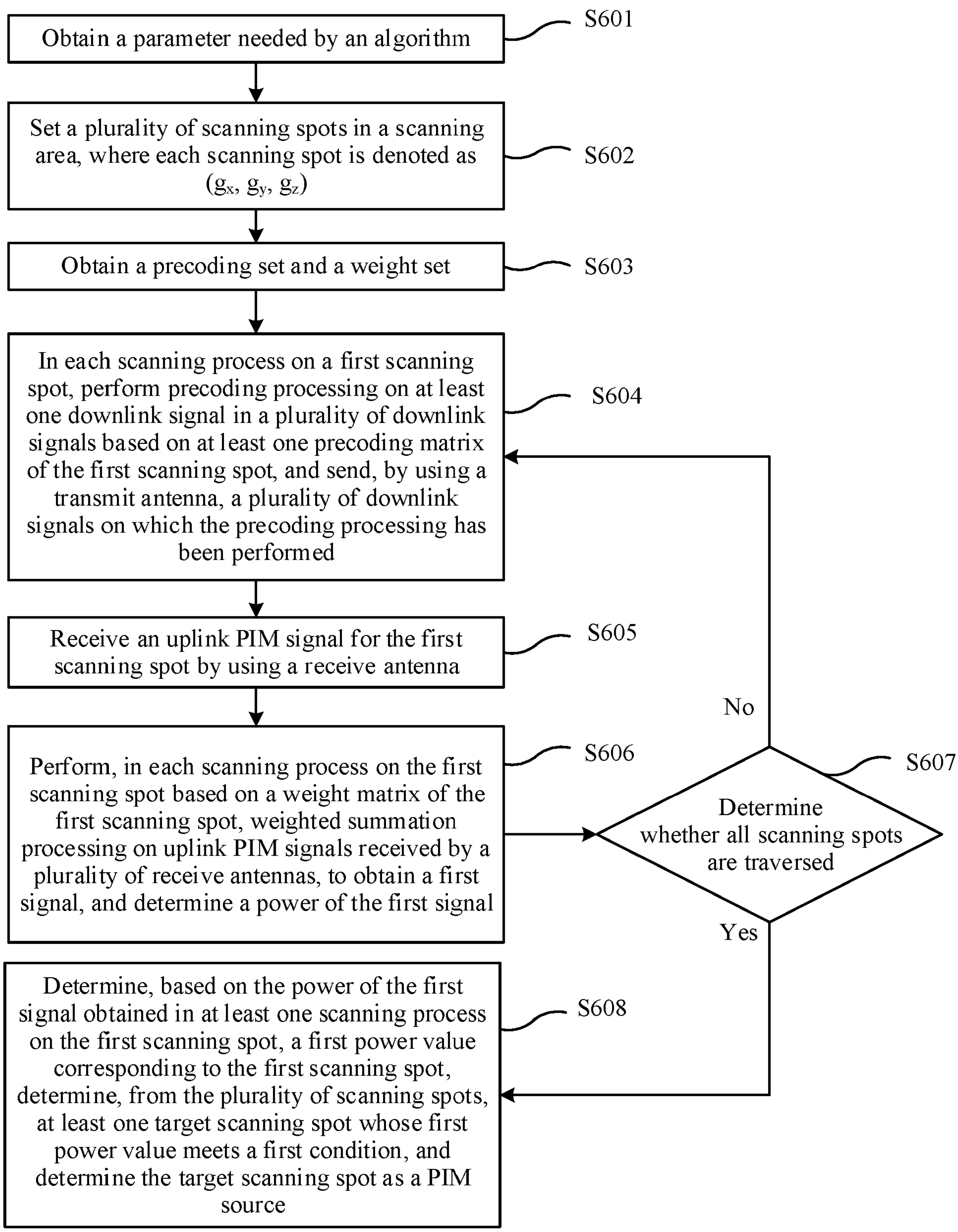
Obtain a parameter needed by an algorithm
S601
Set a plurality of scanning spots in a scanning area, where each scanning spot is denoted as ($g_x$, $g_y$, $g_z$)
S602
Obtain a precoding set and a weight set
S603
In each scanning process on a first scanning spot, perform precoding processing on at least one downlink signal in a plurality of downlink signals based on at least one precoding matrix of the first scanning spot, and send, by using a transmit antenna, a plurality of downlink signals on which the precoding processing has been performed
S604
Receive an uplink PIM signal for the first scanning spot by using a receive antenna
S605
Perform, in each scanning process on the first scanning spot based on a weight matrix of the first scanning spot, weighted summation processing on uplink PIM signals received by a plurality of receive antennas, to obtain a first signal, and determine a power of the first signal
S606
No
Determine whether all scanning spots are traversed
S607
Yes
Determine, based on the power of the first signal obtained in at least one scanning process on the first scanning spot, a first power value corresponding to the first scanning spot, determine, from the plurality of scanning spots, at least one target scanning spot whose first power value meets a first condition, and determine the target scanning spot as a PIM source
S608

FIG. 6

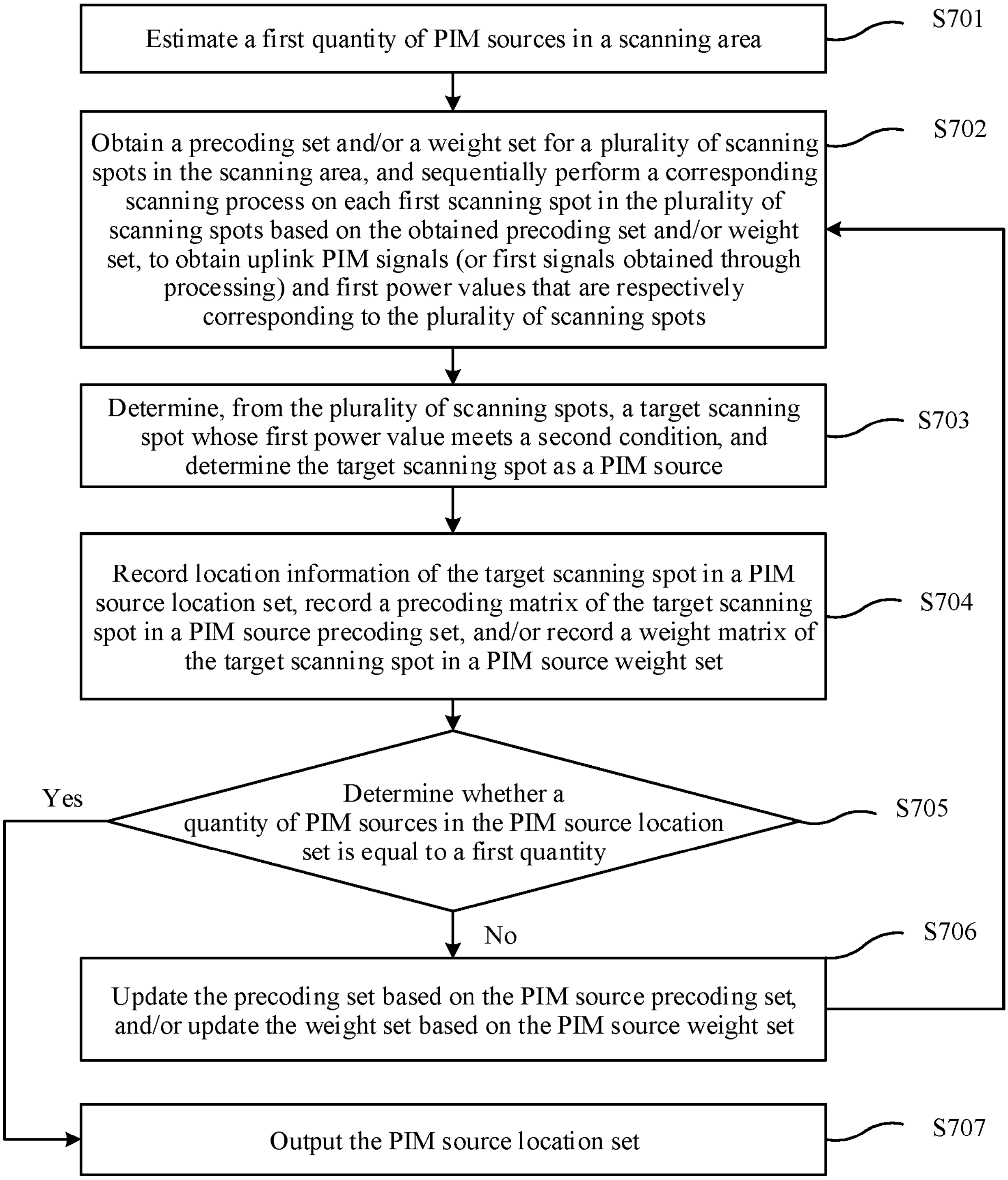
Estimate a first quantity of PIM sources in a scanning area
S701
Obtain a precoding set and/or a weight set for a plurality of scanning spots in the scanning area, and sequentially perform a corresponding scanning process on each first scanning spot in the plurality of scanning spots based on the obtained precoding set and/or weight set, to obtain uplink PIM signals (or first signals obtained through processing) and first power values that are respectively corresponding to the plurality of scanning spots
S702
Determine, from the plurality of scanning spots, a target scanning spot whose first power value meets a second condition, and determine the target scanning spot as a PIM source
S703
Record location information of the target scanning spot in a PIM source location set, record a precoding matrix of the target scanning spot in a PIM source precoding set, and/or record a weight matrix of the target scanning spot in a PIM source weight set
S704
Determine whether a quantity of PIM sources in the PIM source location set is equal to a first quantity
S705
Yes
No
Update the precoding set based on the PIM source precoding set, and/or update the weight set based on the PIM source weight set
S706
Output the PIM source location set
S707

FIG. 7

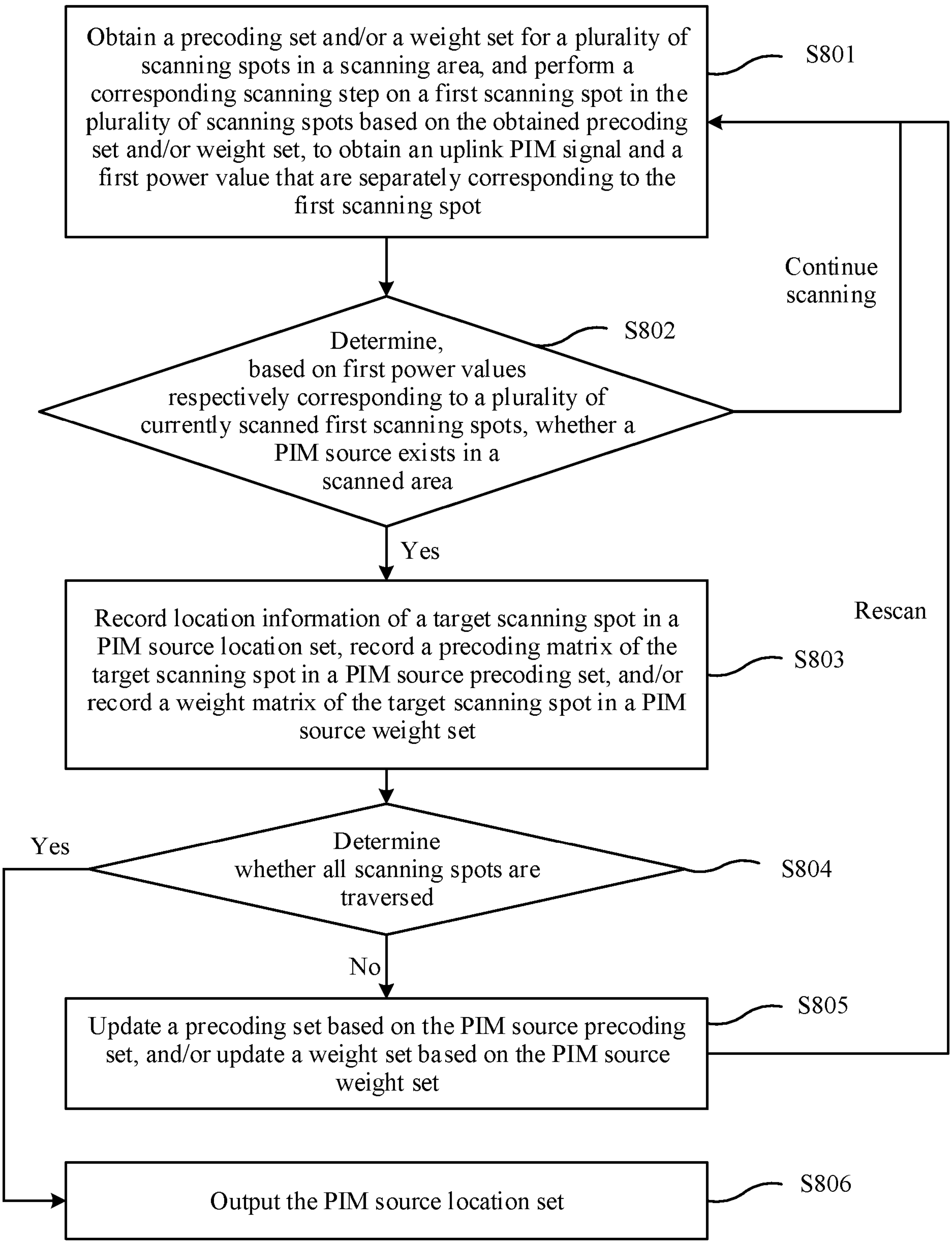
Obtain a precoding set and/or a weight set for a plurality of scanning spots in a scanning area, and perform a corresponding scanning step on a first scanning spot in the plurality of scanning spots based on the obtained precoding set and/or weight set, to obtain an uplink PIM signal and a first power value that are separately corresponding to the first scanning spot
S801
Continue scanning
Determine, based on first power values respectively corresponding to a plurality of currently scanned first scanning spots, whether a PIM source exists in a scanned area
S802
Yes
Record location information of a target scanning spot in a PIM source location set, record a precoding matrix of the target scanning spot in a PIM source precoding set, and/or record a weight matrix of the target scanning spot in a PIM source weight set
S803
Rescan
Yes
Determine whether all scanning spots are traversed
S804
No
Update a precoding set based on the PIM source precoding set, and/or update a weight set based on the PIM source weight set
S805
Output the PIM source location set
S806

FIG. 8

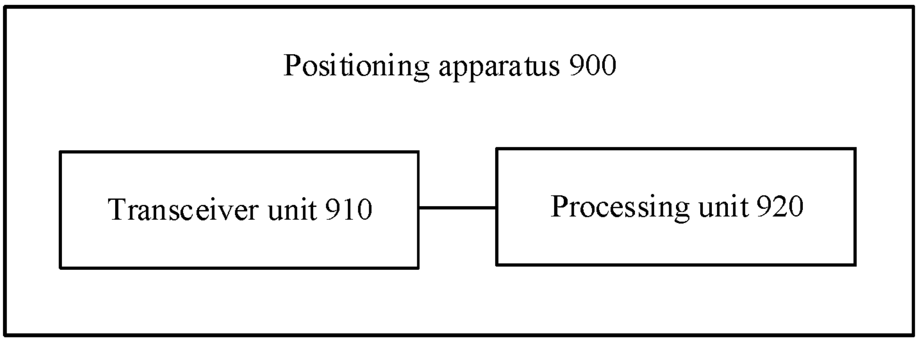
Positioning apparatus 900
Transceiver unit 910
Processing unit 920

FIG. 9

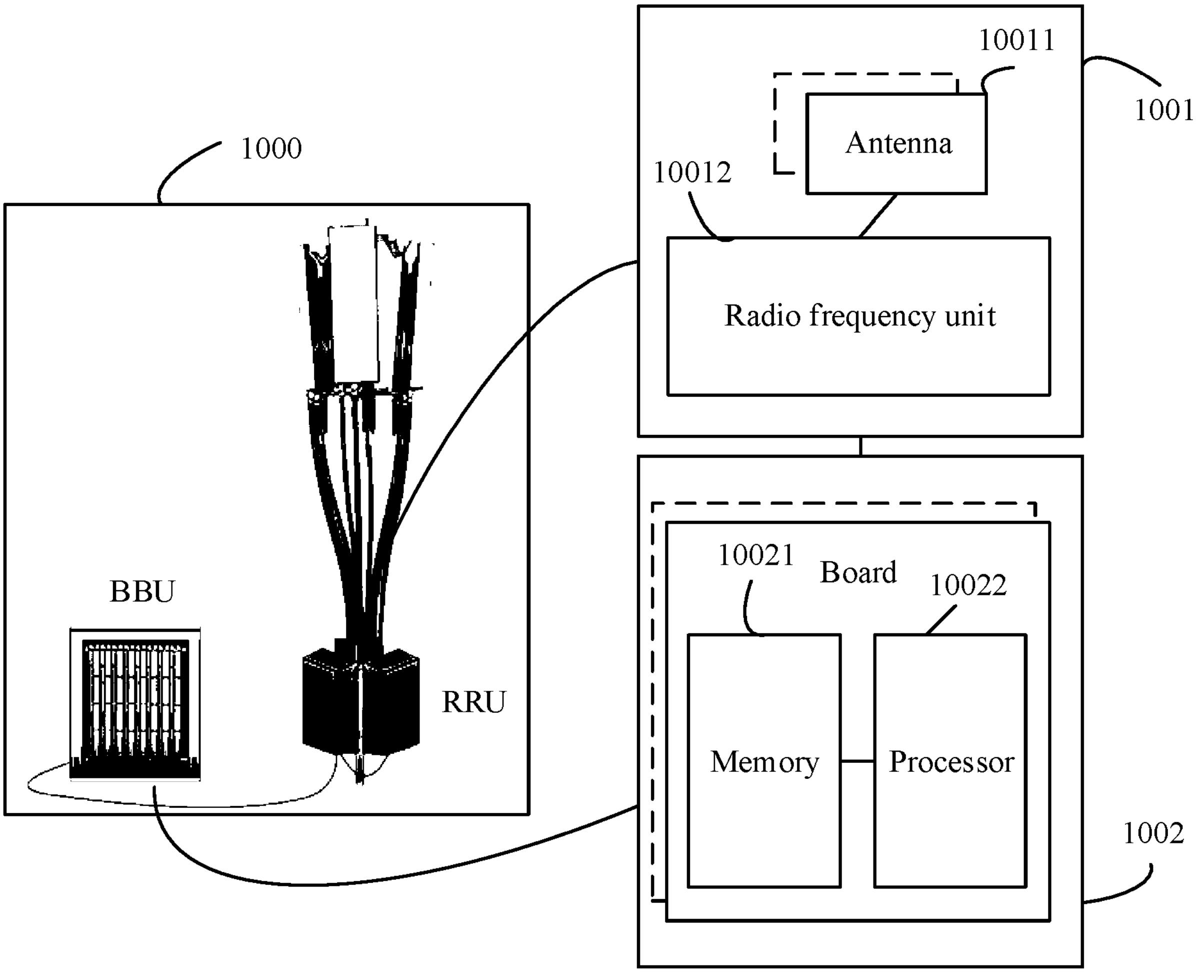
1000
BBU
RRU
1001
10011
Antenna
10012
Radio frequency unit
10021
Board
10022
Memory
Processor
1002

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2018359048 A1
- US 2015358144 A1